(19) Europäisches Patentamt
European Patent Office
Office européen des brevets

(11) **EP 1 413 046 B1**

(12) **EUROPEAN PATENT SPECIFICATION**

(45) Date of publication and mention
of the grant of the patent:
**17.05.2006 Bulletin 2006/20**

(51) Int Cl.:
*H02P 25/08* (2006.01)     *H02P 6/00* (2006.01)
*H02K 3/52* (2006.01)

(21) Application number: **03719434.7**

(86) International application number:
**PCT/US2003/008671**

(22) Date of filing: **28.03.2003**

(87) International publication number:
**WO 2004/001949 (31.12.2003 Gazette 2004/01)**

(54) **ADAPTIVE CONTROL ARCHITECTURE FOR ELECTRIC MACHINES**

ADAPTIVE ARCHITEKTUR DER REGELUNG FÜR ELEKTRISCHE MASCHINEN

ARCHITECTURE DE COMMANDE ADAPTATIVE DESTINEE A DES MACHINES ELECTRIQUES

(84) Designated Contracting States:
**AT BE BG CH CY CZ DE DK EE ES FI FR GB GR HU IE IT LI LU MC NL PT RO SE SI SK TR**

(30) Priority: **19.06.2002 US 173610 P**
**31.07.2002 US 399415 P**
**08.11.2002 US 290537**
**29.01.2003 US 353075**
**29.01.2003 US 353083**
**06.02.2003 US 359305**

(43) Date of publication of application:
**28.04.2004 Bulletin 2004/18**

(73) Proprietor: **Wavecrest Laboratories, LLC**
**Dulles, VA 20166 (US)**

(72) Inventors:
• **MASLOV, Boris, A.**
**Reston, VA 20191 (US)**
• **PYNTIKOV, Alexander., V.**
**Ashburn, VA 20147 (US)**

(74) Representative: **HOFFMANN EITLE**
**Patent- und Rechtsanwälte**
**Arabellastrasse 4**
**81925 München (DE)**

(56) References cited:
EP-A- 0 006 669     EP-A- 0 866 547
WO-A-90/11641     DE-A- 19 503 492
DE-A- 19 704 576     US-A- 5 034 675
US-A- 5 258 697     US-A- 5 365 137

**Description**

**Field of the Invention**

This invention generally relates to electric machines (including electric motors and electric generators). More specifically, this invention relates to a new, "adaptive" architecture for electric machines.

**Background**

The electric motor industry has recently presented a major opportunity for scientific progress, driven by new developments in electronic control systems as well as new, demanding applications - electric transportation in particular. The new generation of conventional electric motors allows a user to vary mechanical output over a greater range, to use electronic controls, and to optimize some particular characteristics of the motor.

Use of modem microprocessors has enabled sophisticated electronic motor controls. Indeed, electronic controls have become an essential part of almost every modem application of electric motors. But the design of the motor itself has not progressed much over the past fifty years. That makes the ability for modem controls to improve the performance of the motor naturally limited and restricted by conventional motor designs. Electric generator development has a similar story.

This invention applies recent high-tech breakthroughs to improve basic electric machine (motor, generator, and other machine) architectures first pioneered over a century ago. Electric motors, generators and other machines with a new, "adaptive" architecture in accordance with this invention may provide more power in a smaller, lighter package; may respond better to control; may be less expensive and easier to repair; and may be more efficient than existing electric machine designs.

The electric machine - especially electric motors and generators - forms the foundation of modem industry. But in spite of their importance, electric machines remain largely century-old technology. Michael Faraday first discovered the principles that enable basic DC electric machines in 1831. Nikola Tesla made a further leap with the first AC motor in the late 1800s. Faraday, Tesla and others applied these same principles to electric generators. Thomas Edison and other inventors made later advances, particularly with regard to DC power generation.

Of course, the revolutionary technological advances in the 20th century did not leave electric machine technology behind. That technology has evolved amazing applications from tiny (milliwatts) micromotors to huge (megawatts) hydroelectric generators. Unlike the explosive advances in computer technology, however, advances in electric machine technology have come relatively slowly and incrementally. Indeed, drawings and descriptions of electric motors from the writings of Tesla and generators from those of Edison will look very familiar to modern-day engineers.

But with the enormous use of electricity and electric motors, century-old electric machine designs must be brought up to date, using the latest technologies not available in the past. Converting energy from fossil fuels, nuclear energy, and other sources into electric power, and then converting this electrical power into mechanical power, is fundamental to modem industry. This process should be done better.

A variety of types of electric machines exist - induction, synchronous, switched reluctance, brushless DC - each type with its advantages and disadvantages. While electric generators and motors of these various types have been improved, no type of electric machine avoids making compromises: accepting disadvantages in some areas to get benefits in other areas. An electric machine that can adapt to a wide range of operating conditions, always providing optimum performance, would be a significant advance over existing architectures.

Because compromises are so difficult to avoid, one attempt to make a practical electric propulsion system for a car, US Patent 5,549,172, goes to the extreme of using two motors in the car. That invention recognizes that no existing motor performs well over the whole range of car operating conditions. Accordingly, that invention tries to upgrade overall system performance by combining a highly efficient motor at low speeds with a highly efficient motor at high speeds. The obvious disadvantage is the need for two complete, separate electric motors.

With so many electric machines in use, any improvements in electric machine performance can have a tremendous effect. Modem industrial societies consume huge amounts of electricity. It is estimated that worldwide use of 12 trillion kilowatt hours in 1998 will nearly double to 22 trillion kilowatt hours in 2020. This compares to worldwide consumption of less than approximately 2 trillion kilowatt hours in 1950.

Electric motors consume most of this electrical power - about two-thirds of all electricity generated. And electric generators produce almost all of it. That makes these electric machines crucial for generating electrical power and using it to power modem industry.

How can electric machines be improved? For electric motors, efficiency is the chief performance benchmark. There is an urgent need for electric motors with high efficiency over a wide range of operating conditions. Other performance benchmarks include: High starting torque to get the motor moving. No gears. High torque at low speed. No cogging torque. Increased torque output. More torque per system weight. Increased reliability. Ability to operate with some faults. Ease of service and maintenance. In vehicles, high torque and power densities matched with low gross weight and limited power requirements.

Improvements in these areas can make a big difference in electric motor performance. That alone will have tremendous value. As a valuable addition, however, enough improvement in efficiency and performance will enable electric motor applications that currently do not exist.

For example, no existing electric motor can deliver the strict performance demands of road vehicles at reasonable efficiency and competitive cost. Dramatic improvements in electric motors could make them a real alternative to combustion engines in powering road vehicles. Electric motor technology that could meet these performance demands would be truly "enabling technology," and it is urgently needed.

Similarly, for generators, a real need exists for high efficiency in converting mechanical energy to electric power in a variety of operating conditions. Other areas for improvement include: Reduced active and passive weight. Ease of construction and maintenance. No gears. Ability to house generator inside turbine rather than separately. Low initial capital cost. Here again, improving existing generator designs will allow century-old designs to be updated. But with generators as well, enough improvement in efficiency and performance will enable electric power to be generated even by energy sources that are not currently economical. For example, windmill generators might become competitive in areas of medium, and perhaps even low, wind speeds. Existing generators require subsidies to operate in those conditions.

Improvements in electric machine performance can make a big economic difference. Cheaper electrical energy, and mechanical power produced by electric motors, will enhance economic productivity in advanced economies. Low-cost electrical and mechanical power is essential to economic growth in developing economies. New electric machine technology may help to keep power prices low even in the face of increasing demand.

Better electric machines bring environmental benefits as well. More efficient machines mean less wasted energy, reducing the harm to the environment caused by energy production. If electric cars become a viable alternative to internal combustion-powered cars, air pollution will be greatly reduced. As the demand for energy grows, the efficiency and reduced harm to the environment that better electric machines can bring become even more important.

A device for driving a positional determination in an adjusting system is known from DE 195 03 492 A1, in which system and adjustment occurs by means of a reluctance motor. Evaluation of the motors positional dependent inductances can be used, by way of the observer principle, to continually determine the position without an additional sensor. The drive therefore assumes, additionally, the function of a sensor.

Further an electric motor is known from US 5,365,137, which motor has a cylindrical, non-magnetic casing formed in axially aligned sections with a polygonal exterior surface and a circular interior surface. Separate U-shaped stator pole assemblies are releasable mounted against the exterior of a casing, each casing section carrying the poles associated with a different motor phase. A signal is processed by a micro processor and phase controller, each associated with a different one of the motor phases.

Further, an electronically commutated reluctance motor is known from WO 90/11641, which motor structure and energizing scheme provides a high efficiency electronically commutated reluctance motor. The stator includes unevenly spaced poles grouped into pairs separated by a space related to the even spacing of the poles on the rotor. Adjacent pairs of poles on the stator are separated by a spacing which equals the spacing between the poles of a pair.

Further, an electric circuit of the windings of a reluctance motor is known from EP 0 866 547 A1, according to which the motor has a pulsed magnetic field provided by windings carried by magnetic yokes, with their poles spaced unevenly around the rotor. The yoke poles and the rotor poles are arranged in path in diametrical symmetry to the rotor access.

## Summary of the Invention

The present invention is to improve the performance and efficiency of an adaptive electric motor and generator.

The object of the present invention is solved by the subject-matter of the independent claims. Further, advantages, embodiments are defined by the dependent claims.

Adaptive electric machine technology has the potential to improve performance of electric machines in any given application. This improvement may come by expanding the range of optimal machine performance, or by increasing the overall efficiency of the machine, or by achieving results not achievable at all with conventional machines, or in some other way. As noted above, basic improvements in electric machines are urgently needed.

Only time will tell whether adaptive electric machine technology represents a revolutionary advance, or something more incremental. Any new technology can only be proven by substantial development, deployment and testing. But an adaptive electric machine designed in accordance with this invention has the potential to provide a variety of needed significant advances over existing electric motor and generator architectures. (Throughout the summary and detailed description of this invention, an electric machine designed in accordance with this invention will be referred to as an "adaptive electric machine.")

Adaptive architecture in accordance with this invention draws on recent advances in a variety of different fields: power electronics, digital signal processors, semiconductors, and advanced magnetic and soft iron materials. Using these and other advances, an adaptive electric machine may overcome some fundamental limitations in electric motor and generator performance that have persisted since Faraday and Tesla first invented them.

Modem electric motors often have sophisticated, microprocessor-based control systems. But an adaptive electric machine may provide even better control over machine operation by isolating the machine's electromagnetic circuits to eliminate interference, then providing adequate optimal control to each independent electromagnetic circuit by controlling electrical flow in each circuit independently of electrical flow in each other circuit. Better control means better opportunity to optimize. Rather than being forced to accept compromises in selecting the type of motor to use - such as giving up high starting torque to achieve variable speed - an adaptive electric machine may, because of its adaptive nature, provide optimum performance over a wide range of conditions.

Additionally, adaptive machines normally use digital-based programmable controllers. These controllers can greatly facilitate the control of the overall application that uses the adaptive electric machine, and make software an important part of overall control. This leads directly to great cost savings during development, implementation, operation, and upgrade of any specific adaptive machine. Because of these benefits, adaptive machines are attractive for implementation and use by designers and manufacturers of specific applications, and for ultimate end users of the applications that use adaptive machines.

Adaptive electric machines may improve efficiency, reliability, ease of maintenance, and performance, as well as reduce cost, in many applications. Perhaps more important, however, these machines may provide "enabling technology." For electric motors, this means the potential for electric motors that are competitive with internal combustion engines in vehicles. For generators, this means the potential for electricity profitably generated from power sources, such as medium- and low-speed wind areas, that are currently impractical due to high cost.

Adaptive electric machines have the potential for a variety of major benefits. Some of those benefits include the following:

Improved overall efficiency - Conventional electric machines can have the same, or even higher, specific efficiency as do adaptive electric machines for some specific machine speed, or for some specific load, or for some other specific condition. But considering the whole range of operation of the machine, or overall efficiency of the machine operating in a real environment, adaptive electric machines may possess ultimate superior efficiency, which could not be approached by conventional machines.

Improved overall performance - Adaptive electric machines may provide performance that cannot be achieved by any existing conventional electric machines. They may give users a wider range of operational characteristics, easier control and overall superior performance due to all aspects of adaptive motors technology, but more specifically due to the goal-oriented approach for the whole design process of the machine.

Wide range of operations - Compared to conventional electric machines, adaptive electric machines may have many superior performance features, most importantly a wider range of operational characteristics like torque, speed, efficiency, and the like. The ability to expand the range for these most important characteristics should give designers and manufacturers many new opportunities to improve their products. They might improve the specific performance of the applications in which adaptive motors are integrated, improve the performance characteristics and functionality of these applications, or deliver to the user applications which were impossible to achieve with conventional electric machines.

Greatly increased efficiency in certain applications- Adaptive electric machines may exhibit significantly greater efficiency than existing machines, particularly those operating at variable speeds. Of course, efficiency can be improved only to the degree that there is wasted energy, so if a machine's overall efficiency exceeds 90%, there may be little room for improvement. But in applications such as electric cars where operating conditions vary widely, in some cases an adaptive electric machine may have as much as 50% greater overall efficiency than a prior art machine. Greater efficiency in an electric motor powering a car extends the range of the car for a given battery set and battery technology adopted - a big benefit.

Smaller size and weight - The compact design of adaptive electric machines may allow placement in applications where space and/or weight may be at a premium, enabling new uses of electric motors, such as in transportation. High torque density (more mechanical power for each kilogram of machine mass) may enable applications where high power requirements conflict with limited space availability. In electric vehicles, in-wheel adaptive motors may allow unsprung mass, suspension and steering challenges to be addressed cost effectively without sacrificing overall performance.

Human safety/low voltage - An adaptive electric machine architecture may allow most motors to operate with low voltage, generally under 50 volts. This compares with the high voltages (typically 300 volts) required by the AC induction motors in many existing electric and hybrid cars, which require strict safety measures due to their danger to humans.

Ease of development and implementation - Manufacturers and designers wishing to use adaptive machine technology may be able to capitalize on the structural uniformity and simplicity of adaptive machine design for various applications. Knowledge of the specific required goal functions for the application and consistency of the design process should permit design and easy deployment of adaptive machines into a wide variety of end-user applications by following simple, standard procedures.

Lower system cost - In most cases, adaptive electric machines may have lower system costs than conventional electric machines (and their control systems). In part, this is because adaptive electric machines have built-in controls designed from the very beginning to be part of the overall design for the application. Also, digital software-based controls are generally cheaper then similar analog circuits. Another important cost issue relates to the power electronics of control systems - adaptive electric machines generally have more control channels with less power in each channel, which reduces significantly the total cost of the power electronics for switching the channels.

Lower manufacturing cost - Because of savings in material and labor, adaptive electric machines may cost substantially less to manufacture than conventional machines. In particular, the opportunity to make adaptive electric machines modular can make them much easier to manufacture.

Lower costs of design and redesign - After implementing an initial design and integration into an application of a first adaptive machine, design and integration of other adaptive machines by the same manufacturer will be smooth and seamless. The same mathematical models and similar control electronics should allow a shift in concentration in design (and especially in redesign or upgrading) mostly to the software development level. This makes design, redesign, and upgrading much more efficient, with faster development and turnover times and cheaper development processes, than in the traditional electric motor and generator industry.

Software-based controls - The controls for adaptive electric machines may generally be software-based. This may provide a great benefit to designers and manufacturers by significantly facilitating the implementation and fine tuning of adaptive electric machines in actual applications. Hardware control systems must be physically modified to fine tune them during development, and hardware can be upgraded and improved only by replacement. With software, much of the fine-tuning, as well as future upgrades and improvements, can easily be done on a software level within the same topology, hardware, and controller of a specific electric machine.

Less vibration and noise - In contrast to prior art machines, an adaptive electric machine may typically exhibit quieter and smoother operation with less cogging torque and less fluttering. An adaptive electric machine may adapt to wear of the components of the machine, so that vibration and noise will not increase even as the machine ages. An adaptive machine may also perform diagnostics to inform the operator when excessive wear or damage pose problems.

Increased stability - Users and utility systems alike may benefit from a more favorable power factor than conventional motors, because adaptive motors operate efficiently at small load and typically are capable of much higher peak torque. Adaptive machines have a long mean time between failures, and may be used longer than conventional machines.

Easier service and repair - Adaptive electric machines may have separate modules that may be easily serviced and repaired. Particularly with large electric machines, the ability to repair or replace a single module rather than the entire machine can greatly reduce the time and cost of servicing.

Easier upgrades - With adaptive electric machines, it may be possible for the electric machine to be upgraded by software. While the basic machine structure may remain fixed, many important characteristics of the machine, such as the control scheme, may be upgraded by modifying the software. Preferably, this may be done remotely or over the Internet, where software will be available for different operating conditions.

Modular upgrades - Adaptive electric machines consist of three distinctive modules: an electromagnetic system, a control system, and software. Upgrades may be done in a partial way by replacing just some components of these modules. The easiest upgrades to carry out are those involving software, which can usually be done by a simple reprogramming of the controller. New digital or power electronics may lead to a controller upgrade, which may not involve any software or machine hardware upgrades. In concept, this resembles upgrading a PC, where different modules or components (disk drives, processor, memory, programs, operating system) can often be upgraded without an overhaul of the entire computer system.

Fault tolerance - Adaptive electric machines may have high tolerance for faults. In most cases, the electric machine may operate on no more than 30% of its total electromagnetic circuit capacity, when necessary.

Faster delivery and installation - Adaptive electric machines may have a smaller size then conventional counterparts. The smaller size, and the modular nature of individual electromagnetic circuits, may enable even large (over 1,000 horsepower) adaptive electric machines to be manufactured and shipped directly to the customer without costly disassembly and subsequent onsite re-assembly and testing, thereby lowering costs and speeding installation.

New applications - The superior characteristics of adaptive machines and performance, which could not be achieved by conventional machines, may lead to the development of new applications impossible to implement before. One example could be in the electric transportation area, where mechanical transmissions and gears might be entirely abolished and replaced with pure electronic controls.

With these and other advantages, adaptive electric machines may provide greatly improved performance for many applications. Two examples illustrate how adaptive electric machines may perform better than existing electric machine designs, particularly where the machine needs to operate at variable speeds. As an electric motor example, we describe a set of four, in-wheel electric motors that power a car. As an electric generator example, we describe an electric generator powered by a wind turbine.

As those skilled in the art will recognize, however, applications for adaptive electric machine designs apply much more broadly than these two examples. Indeed, most if not all electric motor and generator applications may be improved by using an adaptive electric machine design.

For example, applications for adaptive motor designs include propulsion for all kinds of vehicles, ships, submarines, escalators, cranes and elevators. They also include large electric motors (1,000 horsepower and above) used as pumps, fans, blowers, compressors, and belt drives. These motors are crucial to large process industries such as steel production, pulp and paper processing, chemical, oil and gas refining, mining and other heavy-duty applications. In general, adaptive motors may be superior to existing motor designs in almost all variable-speed applications.

In particular, fans and pumps employ over 50% of motors used in industry. Most fans and pumps use some form of flow control to match supply with demand. Because most motors do not perform well at variable speeds, mechanical methods (such as a damper on a fan or a throttle valve on a pump) are generally used to control flow. These methods waste energy by increasing the resistance to flow and by running the fan or pump away from its most efficient speed.

An adaptive motor that can operate efficiently over a range of operating conditions provides a much better solution. For centrifugal fans and pumps the power input is proportional to the cube of the speed, while the flow is proportional to the speed. That means that when speed (or flow) of the fan or pump can be reduced by just 20% from maximum, power consumption can potentially be reduced by almost 50%. Instead of wasting energy by using mechanical flow control in fans and pumps, energy can be saved by using an adaptive motor to drive them.

Potential applications for adaptive electric machines come from many different industry markets. In any case where complex controlled mechanical movement is required and the parameters of that movement are variable, adaptive motors should come into play. And in most cases, adaptive generators should outperform their traditional counterparts. Generally, there are three existing markets where applications using adaptive motors and generators should offer superior performance.

Existing electric motor and generator market - This well-developed, mature market does over $11 billion a year in sales and involves intensive competition. But in each instance where high torque or variable speeds are required, adaptive electric machines may have strong advantages. Particular examples of applications may include hand tools, pumps, motors for refrigerators and compressors, wind generators, robotics, and the like.

Existing small internal combustion engine market - This market is much larger than the electric motor and generator market - about $25 billion in annual sales - and is also well developed and mature. Some applications in this market consist of chain saws, garden tractors, garden tools, and other lawn, home and recreational equipment. Adaptive electric motors should be directly superior in performance to the motors currently used in these applications. But there are also a number of other important reasons to change these applications from gasoline consumption. Governmental incentives, environmental concerns, noise, efficiency, and safety are just a few of a number of issues that make adaptive electric motors superior to gasoline-driven internal combustion engines.

Existing small transportation market - Applications in this market include two- and three-wheeled vehicles for individual transportation: golf carts, wheelchairs, warehouse assistance vehicles, bicycles, scooters, and the like. This large market may be one of the best for adaptive electric motors due to their superior performance characteristics.

In addition to the existing markets where adaptive electric machines may be superior to existing machines, the largest single future market for adaptive electric motors clearly lies in the electric transportation market - more specifically in electric cars, trucks, and buses, and the propulsion systems for them. Just the US domestic market for passenger cars (let alone trucks, buses, military, and international markets) presents a huge $650 billion a year market.

An adaptive electric motor may bring great improvements to the transportation market (as discussed in more detail below). In many cases, the unique features of the adaptive electric motor may make it unnecessary to use a transmission, gearbox, reducers, differentials, coolant systems, and the like, for transportation applications, while providing optimal efficiency for the vehicle in all modes of operations. Below is a list of some mechanisms that may be replaced or removed when an adaptive electric motor is used:

| Adaptive Motor = | Internal Combustion Engine |
| --- | --- |
| | +gear box |
| | +reducer system |
| | +part of braking system |
| | +part of ABS system |
| | +part of steering system |
| | +part of suspension system |
| | +cooling system |
| | +generator |
| | +part of starter/battery system |

In fact, adaptive electric motor technology may influence the whole design concept, general approach and technology of a vehicle. An additional extremely important consideration here comes from the total electric/electronics control of the car and software-based nature of that control. With a centralized electronic control system for a vehicle and its propulsion system, one can easily imagine endless future design opportunities: centralized traffic control, route programming, cruise control, auto-piloting of a car; accident prevention; recovery of lost and stolen cars, ability to deliver service, repair and upgrades to a car electronically or wireless as-you-go, future software upgrades of a car, and the like.

Applications for adaptive generator designs include generating electricity using oil, gas, tidal energy, solar energy, biodegradable fuels, and hydro-, nuclear- and wind powered turbines. More generally, however, they include almost any other application converting mechanical energy to electricity.

The first example of a specific application for an adaptive electric machine is the electric vehicle. Powering vehicles with electric motors poses real problems. Operating conditions change constantly. Starting requires high torque at low speed. Cruising requires efficiency. Limits on battery power restrict range. Passing on a highway requires bursts of high torque at high speeds. However, putting a heavy engine in the car's wheels adds too much unsprung mass for the car to handle well on roads. No existing electric motor can deliver these performance demands at reasonable efficiency and competitive cost.

Adaptive electric machines may solve those problems. As an electric car power system, an adaptive electric machine may be mounted directly into each of the four wheels of an electric car. A local digital signal processor ("DSP"), optionally or possibly mounted inside the electric motor, may control each motor. Decision-making algorithms may track and analyze vehicle performance, identifying load requirements nearly instantaneously and delivering energy accordingly.

The motor may reconfigure itself as needed, locally using its DSP, up to thousands of times per second, for improved efficiency at all speeds, in all environments, and over all terrains. During braking, the motor may act both as a generator and as a braking/ABS system, capturing regenerative energy from braking for reuse in the most efficient way.

The architecture of the adaptive motor may permit individual stator pole pairs of an in-wheel vehicle motor to be repaired or replaced without requiring the entire stator to be repaired. In addition, the controller of an adaptive motor may be programmed to allow the motor to run even though one or more of the stator pole pairs are disabled or damaged.

In an adaptive motor, the electromagnetic material forming the stator pole pairs may be greatly reduced from traditional designs, adding to efficiency. Careful design, such as the use of Soft Magnetic Composites ("SMC"), may improve the form factor of the machine, which helps in reducing the size and the active mass of the motor. This may also help in reducing the net core loss at operating frequencies and induction levels, thus increasing the efficiency.

In addition, reducing the total mass of the motor makes a big difference when the motor is an in-wheel car motor. Reducing unsprung mass in the wheels greatly improves the handling of a car. A major problem with using in-wheel motors to drive cars has been getting enough power from an in-wheel electric motor to drive the car within tight size and weight constraints.

Compared to prior art motors, an electric car propulsion system design with four in-wheel adaptive motors may provide many benefits. The motor may contain fewer components than prior art motors, leading to lower costs and lighter weight. The motor design may provide high reliability, with only one moving part per drive assembly and no gears or brushes. As noted above, the motor design may also provide high tolerance for faults, with the motor able to operate on no more than 30% of its total electromagnetic circuit capacity, if necessary.

With four motors on the vehicle, each motor may need just one-fourth the current required when just one motor drives the car. The electric vehicle may provide environmentally friendly power - no emissions, little heat, little noise. An adaptive motor may be installed in wheels to fit standard hubs, in geared or gearless direct drive applications

An adaptive motor may accept electrical power from batteries, a gasoline generator, or other power source. Importantly, the vehicle may operate with low voltage, generally under 50 volts. This compares with the high voltages (typically 300 volts) required by the AC induction motors in many existing electric and hybrid cars, which require strict safety measures due to their danger to humans.

While all the above are important advantages, the main advantage of adaptive electric motors may be this: increased performance, efficiency and power (or torque) at high and low operating speeds. Existing combustion engines and electric motors for driving vehicles do not perform efficiently over a wide range of operating speeds and conditions. An adaptive motor may.

The second example of a specific application for an adaptive electric machine is windmill generators. Generating electricity from wind power poses real problems for electric generators. Wind speed and direction change frequently. Strict limits govern weight and size inside the wind turbine. The power grid requires a fixed frequency to be fed into it. Yet rotational speed may affect the frequency of the power generated.

Current designs must make trade-offs to address these issues. Some use efficiency-robbing step-up gears, complex electrical systems to deliver constant power at variable turbine speeds, or fixed-speed designs that produce loud noise at low wind speed. No existing generators do this well enough to be practical for areas with lower or fast-changing wind speeds.

An adaptive generator may solve those problems. As a wind power generation system, an adaptive electric machine may be connected directly to the shaft of the windmill's wind turbine. The basic structure of this rotating electric machine may be as described above, for the electric motors for vehicles.

A digital signal processor, mounted inside the electric generator, may control the generator. Decision-making algorithms may track and analyze turbine performance, identifying mechanical power capacity nearly instantaneously and delivering control inputs to the generator accordingly.

The generator may reconfigure itself as needed, up to thousands of times per second, for improved efficiency at all wind speeds and conditions. The generator may produce either asynchronous power or power synchronized for connection to the power grid, with actively corrected voltage fluctuation and with minimized harmonic content.

Compared to prior art generators, an adaptive windmill generator system may provide many benefits. The adaptive generator may contain fewer components than prior art generators, leading to lower cost and lighter weight. The adaptive generator design may provide higher reliability, with only one moving part per drive assembly and no gears or brushes. The generator design may also provide higher tolerance for faults, with the generator able to operate on no more than 30% of its total electromagnetic structure, if necessary.

Multiple generators may be used on each turbine. The windmill adaptive generator may provide environmentally friendly power - no emissions, little heat, little noise. An adaptive generator may, in many cases, fit within the wind turbine and be directly driven by it without the use of inefficient gear configurations. The generator may operate efficiently in areas of medium to low wind speeds, even when the wind speed changes rapidly.

While all the above are important advantages, a most significant advantage of an adaptive generator over the prior art may be this: improved efficiency and power at variable turbine speeds. Existing generators for windmills do not perform efficiently over a wide range of operating speeds and conditions. An adaptive generator may.

Improving control of electric motors has long been a goal. But in prior art motors, too many factors influence the driving signal of the motor to give any real effect to improved control schemes. By providing an architecture that may be more effectively controlled, an adaptive electric machine provides the potential for improved performance over a wide range of conditions.

The problem with the prior art has been that these advanced control schemes could not effectively control the electromagnetic circuits of prior art electric machines over more than a narrow range of operating speeds. Magnetic and electrical interference between the electromagnetic circuits made effective control achievable only by trial and error tuning to a particular narrow range of operating speeds.

Thus, prior art electric motors could be designed to be highly efficient over a narrow range of operating speeds. They could not be dynamically controlled to be consistently efficient as the operating speed varied during use over a wide range.

An adaptive electric machine may be made to respond effectively to control. Conventional three-phase motor controllers control only current (amplitude and frequency) and two phase delays. This gives a total of four independent controllable parameters, assuming that the energization profile in each phase is the same and not changing with time.

Such a small number of controllable parameters often cannot deliver the desired performance of the motor, particularly over a wide range of operating conditions. In addition, issues like efficiency, torque ripple, continuous torque output, mechanical and acoustical noise, excessive hysterisis, eddy current and anomalous core losses, inadequate thermal management, mutual inductance and cross talk (transformer effects), and similar problems cannot easily be managed with these limited parameters.

Consequently, many prior art developments were made in an attempt to increase the number of controllable parameters. Some of the developments increase the number of phases from three to five, seven, fifteen or even more. Others work on the excitation profiles, and managing the amplitudes and phase delays of the harmonics present in the excitation currents. These developments were tried using all existing techniques for controlling conventional motors, with pulse width modulation processing of the DC current, or pulse width modulation-based inverters generating AC output, being the most popular strategies.

But these developments have achieved only incremental improvements. This may be due to one main reason - conventional multiphase motors do not have electromagnetic circuits that are isolated from each other sufficient to substantially eliminate electrical and electromagnetic interference between the electromagnetic circuits. As a result, any change in one controllable parameter of the motor may cause complex, dynamic changes in the electromagnet circuit of the motor. At some point, the controller parameters really cannot be controlled independent of each other.

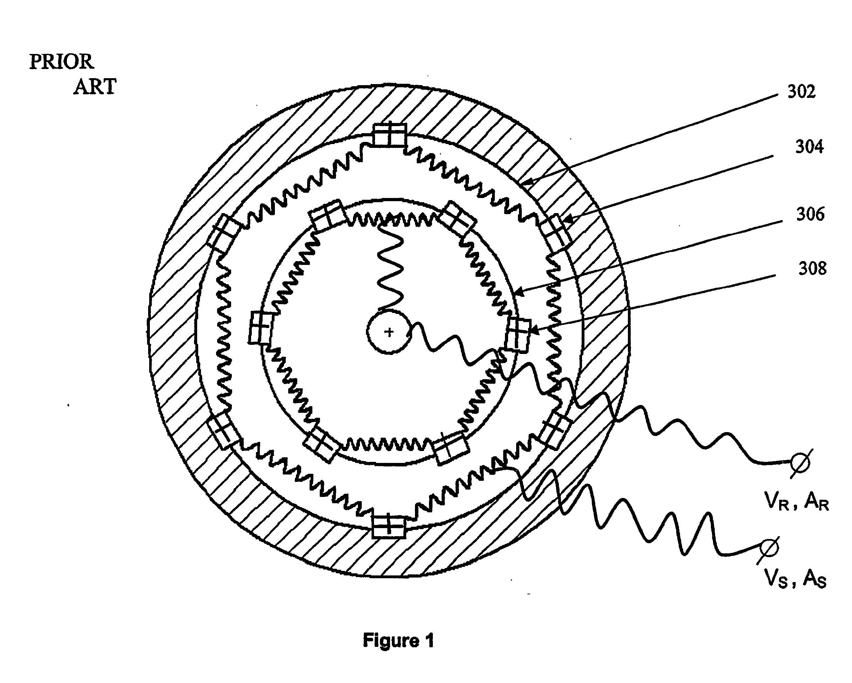

This can best be seen by comparing a conventional electric machine with an adaptive electric machine. Figure 1 shows a schematic for a conventional electric motor. A magnetic stator 302 contains some magnets 304, which depending on the motor type, may be permanent magnets or electromagnets. The magnets 304 are all electrically and magnetically connected to each other. A rotor 306 with magnets 308, also either permanent or electromagnets, is also electrically and/or magnetically integrated.

The schematic of Figure 1 covers a wide variety of AC and DC electric motors. The most conventional brushed DC motor would contain electromagnets 308 on the rotor 306, which are commutated by brushes, and permanent magnets 304 on the stator 302. Other types of DC motors include servomotors, step motors, and the like, which may have other designs but still the same general schematic.

Brushless motors would have permanent magnets 308 and electromagnets 304. Other types of DC motors, particularly wound DC motors, also fall under the same structure. AC motors also generally fall within this same arrangement. Normally, three-phase induction coil arrangements are made, with five phases and more being quite rare.

With this type of standard arrangement, most attention is devoted to the control of the input voltage V and current A, either just for the stator 302, or both stator 302 and rotor 306. In AC motors, all three phases can be controlled actively, and that ability is behind much of the progress currently being made in AC controllers. Servomotors, step motors, and wound motors can all control more than just two parameters, but are also limited in what can be controlled actively.

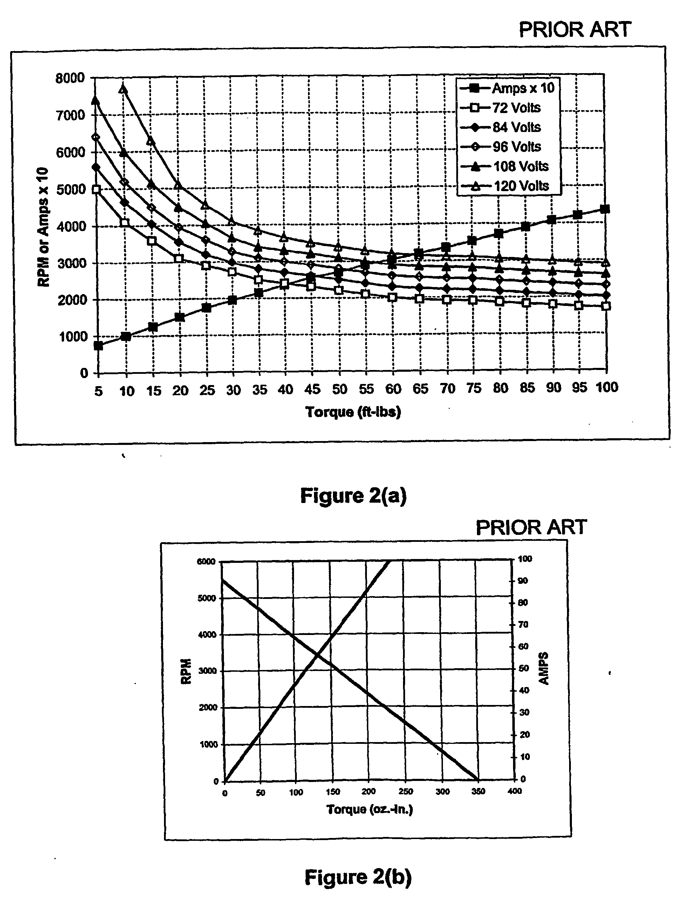

The typical performance characteristics of traditional electric motors are shown in Figure 2. Figure 2(a) shows the speed-torque curves for the actual FBI-4001 series DC motor and its power-speed curves. This motor was used in the first EV-1 electric cars built by General Motors in 1997.

Similar characteristics shown in Figure 2(b) come from a different type of DC motor built by Unique Mobility, Inc. This motor is used in ZAP electric bikes and other transportation applications. As can clearly be seen, useful torque rapidly decreases with the increase in speed of the motor, which is one of the biggest drawbacks of conventional electric motors.

One objective for adaptive electric motors may be achieving the so-called goal function for the motor, which requires identifying the motor parameters that are most desirable from the motor in a specific application. Design tasks routinely work with a goal function in trying to achieve required parameters. A real difference in motor design is how early the design process starts to influence major characteristics and parameters of the motors. In conventional applications, a major decision is what type of motor will be used - AC or DC - and what specific sub-type or narrow group of motor configuration will be considered.

After that major decision, the flexibility left for the designer is already sharply reduced down to few choices. And when the motor is designed down to exact specifications, what really influences performance of the motor is the voltage and current fed to the motor - just two parameters. In multiphase AC motors, some servomotors, and others, the real number of parameters subject to free variation may be larger; perhaps five to six parameters (three voltages and phase angles) in three-phase AC motors.

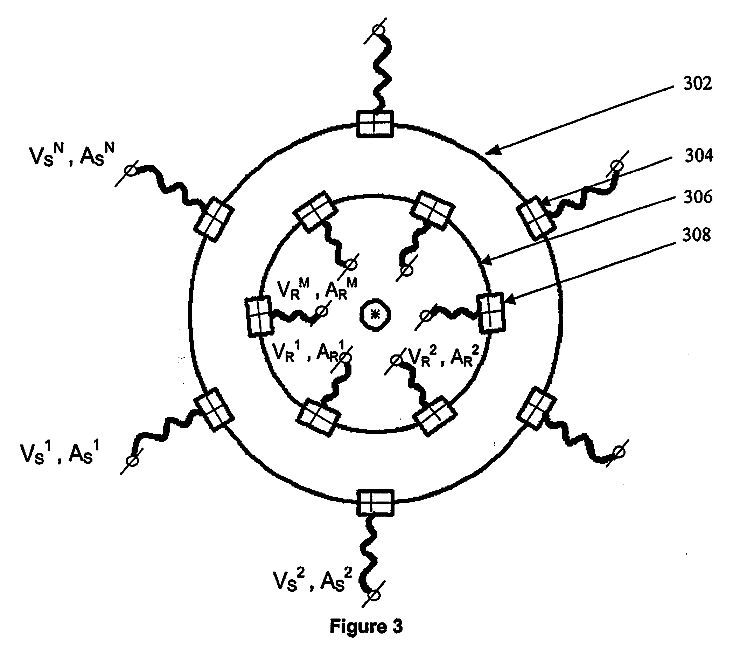

The central idea behind the adaptive motors concept may be to allow enough variables that can be actively controlled during normal operations of the motor for the specified goal function to be achieved as closely as possible. Figure 3 illustrates the schematic of one embodiment of an adaptive motor, which may resemble the schematic in Figure 1 for conventional motors. But at least one substantial difference may be that every electromagnetic circuit can be independently controlled.

In the adaptive electric machine shown in Figure 3, having N independent electromagnetic circuits for the stator 302 and M independent electromagnetic circuits for the rotor 306 gives 2(N+M) independent variables to work with. By controlling these variables properly, the required goal functions may be more closely approximated, which may be a significant difference of adaptive electric machine from conventional machines.

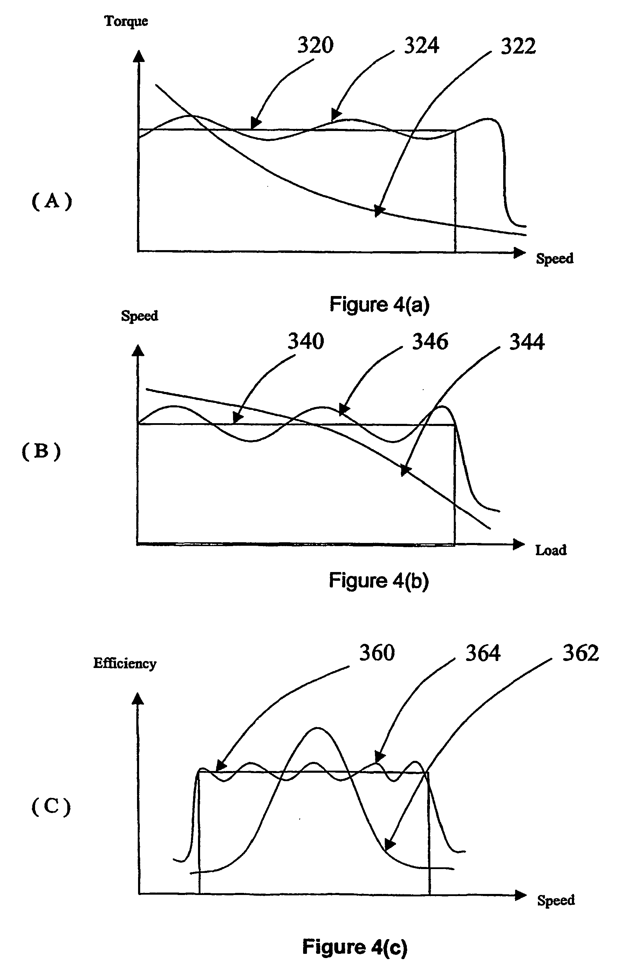

Figure 4(a) defines the requirements for a motor with constant torque over certain range of operational speeds of the motor. The desired speed torque curve 320 is shown, as are the real torque-speed curve of conventional motors 322 (see also Figure 2(a)), and the curve 324 that may be achievable through optimization with multiple variables in an adaptive electric motor.

Figure 4(b) shows an ideal required goal function 340 in applications where constant speed is required over the range of operational loads on the shaft of the motor, typical conventional motor characteristics 342, and performance possibilities 344 of an adaptive motor.

Similar to the above, Figure 4(c) deals with the goal function requiring specific high efficiency over the range of motor speeds or loads. Such requirements arise in some energy-limited applications, for example, space flight applications or battery-driven motors. This Figure 4(c) shows the goal function 360, what conventional motors can deliver 362, and the optimized characteristics 364 for an adaptive motor.

Turning from these examples to more general optimization theory, optimally controlling the motor is a general minimization task of a multi-variable, highly non-linear multiple minima function, commonly called a "loss" or "goal" function. Depending on the control objective, one can minimize, for example, motor losses at a given speed and torque (the most common control objective), or minimize average motor losses in a range of speeds and torques, or minimize torque ripple at a given speed and torque or in a range of speeds and torques.

Other control goals are often formulated. These goals may deal with simple motor-related parameters - such as minimizing noise or electromagnetic emissions, or producing specific transitional behavior of the motor (for example, providing required acceleration of the motor speed). Or they may deal with optimizing the performance of the complex systems using such motors - such as minimizing deviation from the specific speed profile of a large conveyor driven by the motor being controlled, or providing the most energy efficient cruise control for an electric motor-driven vehicle on the road.

When dealing with such real-life complex optimization tasks, one should first identify all parameters, or variables, that might possibly influence the goal function at minimization. For electric motors, these are generally electrical parameters of the excitation circuits (currents for each circuit, their profiles and frequencies, phase delays between individual circuits, and the like).

But they can also include some mechanically or electromechanically controlled parameters. These parameters may include: commutated number of turns or coils currently energized in the motor (which is often commutated by relays for cost reasons but could also be electronically controlled); variable air gap size or variable reluctance (which is most often controlled by electromechanical means but could also be accomplished by using material with electromagnetically-dependent dimensional properties); commutated number of motor segments or parts for multi-segmented motors (like multiple air gap, multiple stator axial motor arrangements); controlled excitation in multi-phase motors to reduce torque ripple and cogging torque; and other similar parameters.

When all such variable parameters are identified and their influence on the goal function is determined and quantified, the optimization can begin in a mathematical sense. One complex and intricate procedure to be followed first (and the procedure is often overlooked as a whole or purposefully omitted due to extreme complexity) is to identify variables that are truly independent from each other (what in mathematics is called to normalize, or make orthogonal, variables in a multi-dimensional variable space). This procedure gives the actual dimension of the variable space - a result the importance of which cannot be overstated.

Many prior art optimization schemes attempted to increase the total number of variables without making due analysis of their interdependencies. Often, prior art electric motor designs introduce concentrated windings on the common stator magnetic path and attempt to control independently these electrically independent concentrated windings. Starting from some relatively small number of independent concentrated windings, the ability of controls to deliver the desired optimal (minimal) goal function is impaired, and any further increase in the number of the independent concentrated windings no longer improves the performance of the motor.

The limitation of the prior art in this case may be that such "independent" electrical variables are actually not independent from each other, due to the fact that the windings are not sufficiently isolated to substantially eliminate electrical and electromagnetic interference between the windings. Significant cross-inductances between such windings may make the controlled variables interdependent. In optimization theory terms, further increase in the number of electrically independent concentrated windings does not result in the increase of independent variables for motor performance optimization.

Other prior art attempts deal with more conventional three-phase motor arrangements, and try to introduce several independent higher order harmonics in the shape of the current injected into each of the three phases. Such harmonics are intended to be independent variables in the sense of defining an arbitrary current shape to be injected.

The limitation is, again, that for known prior art topologies of magnetic path, these harmonics may not be independent variables for the purpose of optimizing motor performance. Again, this may be due to the fact that the phases in three-phase motors have high cross-inductance and exercise significant interference on each other when energized or de-energized under different energization schemes.

Again, at some point any further increase in the number of higher harmonics in the shape of per-phase electric current may no longer result in an increase in the number of independent variables for motor performance optimization. Quite similar results are observed for other prior art attempts to use distorted excitation currents in motors that do not have sufficient isolation of each motor phase to substantially eliminate electrical and electromagnetic interference between motor phases.

Other factors or variables may also affect the performance of electric motors, such as the dimension or size of the air gap. Consequently, variable air gap arrangements (variable reluctance) were considered in many prior art implementations. Because this air gap size variable is independent from the electrical inputs to the windings, the addition of this variable may significantly improve the ability to optimize goal functions; the drawbacks of such arrangements may be the costs and complexity of actual implementation.

Other prior art developments attempt to commutate the numbers of coils or turns energized at different windings of the motor, either in distributed or concentrated windings arrangements. Such changes alter fundamental parameters of the electromagnetic circuits of the motor and present the increase in the number of independent variables available for control. This may result in better performance and larger control flexibility of such motors; the down side may be, again, higher costs and complexity of implementation, which in most cases may involve relays with relatively low reliability and poor total lifetime characteristics.

Yet other prior art arrangements try to resolve the same issue by introducing segmented motors in such a way that separate physical segments of the motor can be independently activated or energized. Most often this is done in the form of an axial air gap flux motor with several stator assemblies coaxially connected to the same shaft or stator frame, but radial flux arrangements are also known. Some of the names used for such arrangements are Segmented Electromagnetic Motor Arrays, cascaded motor arrangements, motor clutching, and the like.

Here, again, as with all other electromechanical arrangements with partial usage of the total windings and/or stator armature, the benefits may be better performance in a wider range. But the disadvantages may be more weight, low torque density, more cost, more complicated controls, and less reliability, among others.

What is really needed (and what the prior art may be lacking and not capable of addressing) may be the ability to have a large number of independent variables that are easily electronically controlled within one simple motor arrangement, so the control of these independent variables can deliver optimal motor performance and achieve the best goal function for any given purpose. And what prevents the prior art from doing so may be the fact that the electric windings are not sufficiently isolated to substantially eliminate electrical and electromagnetic interference between them.

If we were to simply remove the interdependencies of the variables from each other, we may have an electric machine susceptible to deeper control and the potential to achieve better performance than any other electric machine arrangement. Prior art common magnetic path motors do not allow such independence of variables due to cross-inductance along the common magnetic path and similar interference between electric windings.

One way to make these variables independent may be to remove the cross-inductance. That is, to break the magnetic path into several magnetically isolated subsystems so that each subsystem is sufficiently isolated from the other subsystems to substantially eliminate electrical and electromagnetic interference between the subsystems. An adaptive electric machine designed in this way may achieve better control and optimization by sufficiently isolating the machine's electromagnetic circuits, and then providing adequate optimal control to each independent electromagnetic circuit by controlling electrical flow in each circuit independently of electrical flow in each other circuit.

With an adaptive architecture, a very large number of variables may be controlled, effectively and independently, within the machine. Within each electromagnetic circuit, current amplitude and current profile (frequency, shape, phase delays of the start and stop of the profile, etc.) may be controlled individually and independently. As the number of electromagnetic circuits increases, so may the number of controllable variables for the whole motor.

The key objective may be to increase the number of variables controlling the operation of the machine, but in such a way that each variable contributes considerably to machine operation. With conventional machines, increasing the number of variables quickly leads to diminishing returns, since changing the variables starts to have little, if any, predictable, desired effect.

Reaching this key objective of a large number of variables, each with a substantial effect, may enable many of the benefits of adaptive electric machines. Standard control objectives, such as delivering required torque at a given motor speed, may be reached, and then substantially and radically expanded.

Although there are still trade-offs, now a variety of performance objectives may also be achieved, such as maximizing the motor's efficiency as operating speed varies, reducing acoustic and mechanical/electromechanical noise, managing torque ripple, and optimizing the current demand off of the power source. Similar performance benefits may become possible for generators.

An adaptive architecture may open up an electric machine to many novel control schemes. With an adaptive architecture, an electric machine may be adapted to operating conditions to provide optimal performance, such as providing increased power and efficiency over a wide range of operating speeds.

Flexible controls may be considered an important distinguishing feature of adaptive electric machines. Flexible controls create convenience and uniformity when designing and implementing adaptive electric machines in any application. Additionally, controls implemented on the software level bring the possibility of future upgrades on a software level without actual replacement of the motor or controller.

That software-upgrade ability may not only save costs when upgrading, but may also allow the accommodation of existing implementations of adaptive electric machines to future, as yet unknown, tasks as they appear, without requiring actual physical replacement of the machine. It may also give developers and users the flexibility of software design versus hardware changes.

High torque may be another distinguishing feature of adaptive electric motors. Conventional electric motors cannot actively manage torque well, or influence the torque at design level. That is because the choice of a specific type of conventional motor for a particular application largely determines the available torque profile.

An adaptive motor, by contrast, may typically have not only extremely high torque, but also high starting torque. It may also allow for special algorithms to increase torque if necessary, and in general actively manage torque across the range of operating conditions of the motor.

The possibility of optimal performance over a wide range of operating conditions may make adaptive electric machines suitable for the most demanding applications, like propulsion, vehicle transportation applications, and other special applications. Specifically, the extremely wide range of operational speeds that adaptive electric motors permit may eliminate the need for mechanical gears and transmissions in applications where they were previously necessary.

The best example of this may be a passenger car. So far, even electric and hybrid gas/electric cars with an electric motor also have a transmission, gears, differentials and many other mechanical systems that an adaptive electric motor may make unnecessary.

To summarize, some advantages which an adaptive electric machine may provide over existing electric machines include:

- A uniform, consistent concept working throughout the design, implementation, and operation of the machine.
- Simple machine topology facilitating the manufacturing process and reducing costs related to that process.
- Digital-based controllers which are simple to design, cheap to manufacture, and easy to service and upgrade.
- Output power electronics that provide to each electromagnetic circuit only a fraction of the power required by the entire motor. This may dramatically reduce the cost of these electronics, reduce the risk of danger for humans (since low voltages can be used), and decrease the impact of possible malfunctions.
- Software level of controls, which allows implementation of sophisticated control algorithms, too expensive to implement through analog electronics. Additionally, future upgrades may be done on a software level only, greatly reducing the cost of upgrades.
- Outstanding overall performance characteristics, which may lead to the opportunity to create applications with performance features previously impossible to achieve.

A key idea behind adaptive electric machine technology may be that the design of every specific machine is driven by the needs of specific application where the machine will be used. By analyzing specific needs, which are to be fulfilled by the application, and then properly formulating the goal functions for the adaptive machine, a successful design process may lead to the development of an adaptive machine that can achieve exactly desired performance characteristics.

The limitations of conventional electric machine technology allow designers to achieve only a very rough and approximate match with desired performance characteristics. In many cases this leads to the necessity of using reducers and gears with the machine, and in many cases leads to the inability to develop an application that satisfies in full some specific need of the ultimate user.

As discussed above, one key to adaptive electric machine technology may be enabling independent control of the machine's electromagnetic circuits. Unless these electromagnetic circuits or "phases" are independently controlled, optimal goal functions cannot be obtained in a multiphase machine. The topology of adaptive machines is structured to allow independent excitation of the electromagnetic circuits - allowing the electrical flow to each circuit to be controlled independently of the other circuits - and thus enables the controlled variables to be independent. Space allocation between magnets, numbers of these magnets, their proportional numbers, shapes of magnets, and the like - all may be an essential part of adaptive electric machine topology.

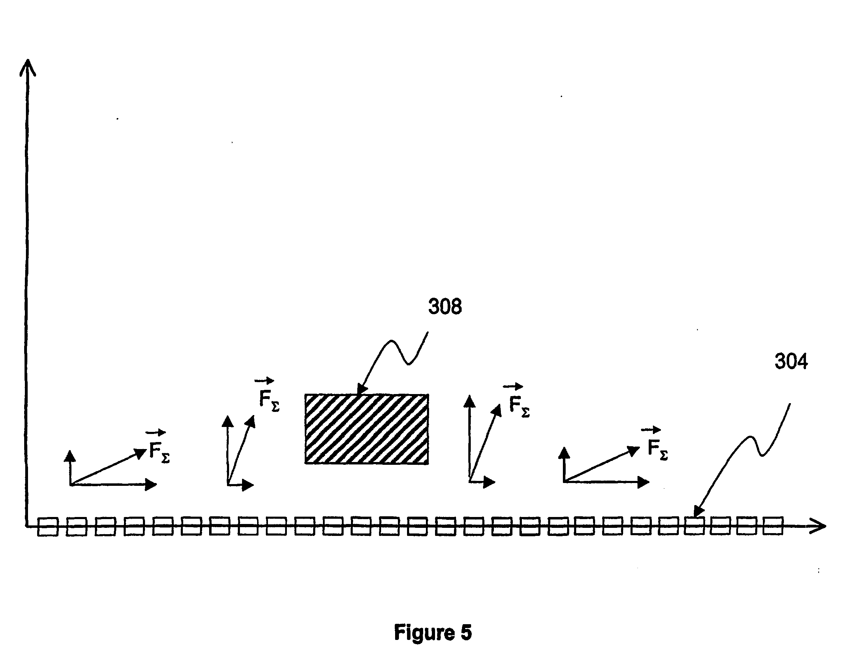

Another important part of the adaptive machine concept may be in how to energize the electromagnetic circuits of the adaptive machine. To illustrate this, Figure 5 shows a magnet 308 of a rotor above a number of electromagnets 304 of a stator. Depending on the way the electromagnets are energized, different patterns of resulting forces may occur. The controller for an adaptive machine may thus become an essential and very important part of the machine, since it allows the energization of the stator electromagnets 304 in a way that facilitates the machine's performance closely approximating the goal functions.

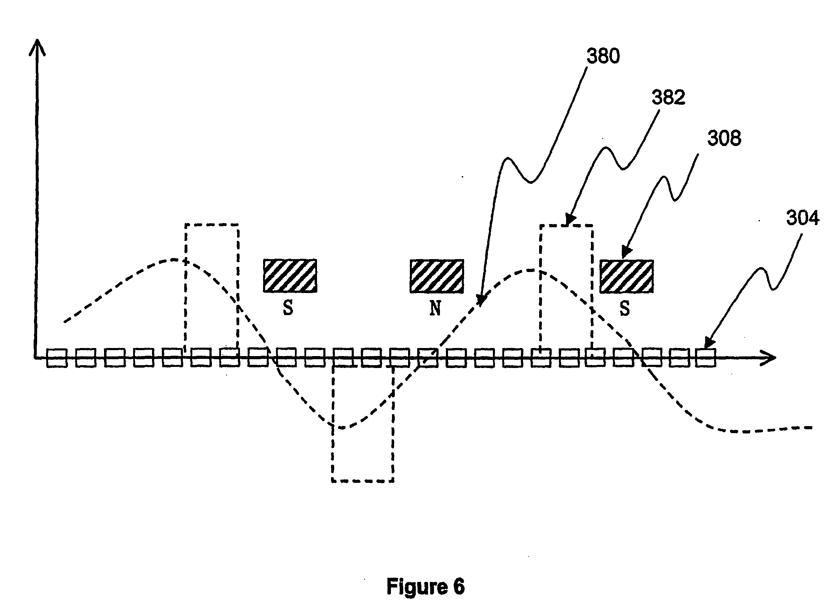

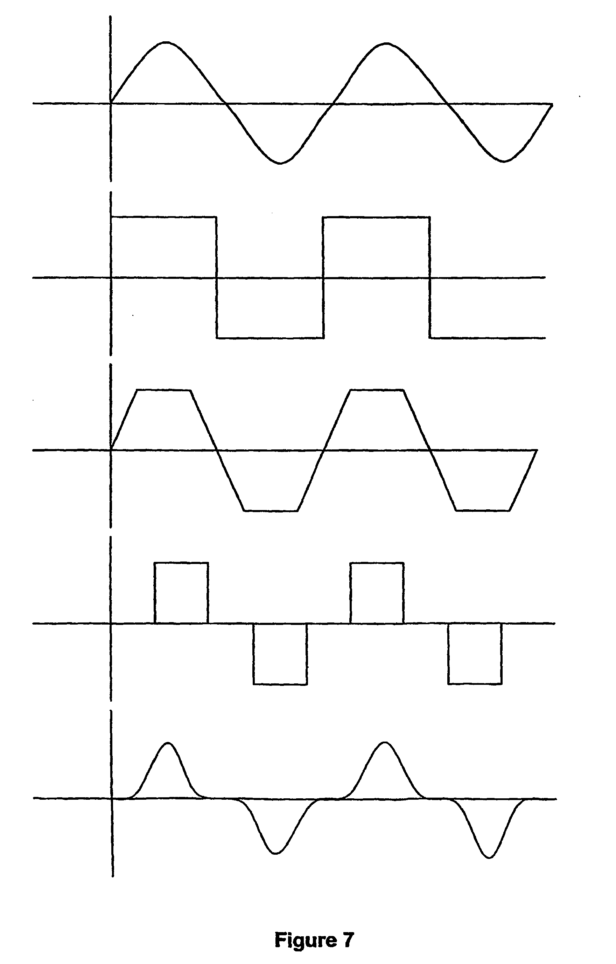

Specific examples of how different patterns of energization may be formed in an adaptive machine are shown on Figure 6. One line 380 represents a simple sinusoidal waveform interacting with alternating poles of the rotor magnets 308 - this way each stator magnet 304 can be energized with a simple sinusoidal current waveform. Another line 382 shows another option, step energization, which is also simple to implement. Figure 7 shows some further examples of possible energization current waveforms.

This may lead to an important result. The same adaptive electric machine may be able to be energized in a variety of ways, and thereby the same machine may be made to perform in a variety of ways - something that may be impossible for conventional machines. Additionally, if the number of electromagnetic circuits is large, specific goal functions may be approximated with more accuracy, power electronics for each electromagnetic circuit may be cheaper and simpler, and the impact of possible malfunctions may be smaller.

Most adaptive machine controllers may turn out to be digital, microprocessor-based, programmable controllers. The importance of software and proper software development for such controllers may be very important. In fact, all the means for forming specific waveforms may well be implemented on a software level, not in hardware.

That simple statement, in fact, may indicate an enormous advantage of adaptive electric machines. That may lead to the ability of adaptive electric machines to adapt to operating conditions, their ability to operate in ways impossible for conventional machines, their software re-configuration ability, their ability to be easily upgraded, and the like. A whole roster of software benefits may come into play.

Adaptive electric machines designed and implemented in accordance with this invention may use some or all of the adaptive machines concepts and technology described herein. On a large scale, there are at least three substantial groups of embodiments of adaptive machines that may be the most practical designs for applying adaptive electric machine concepts and technology.

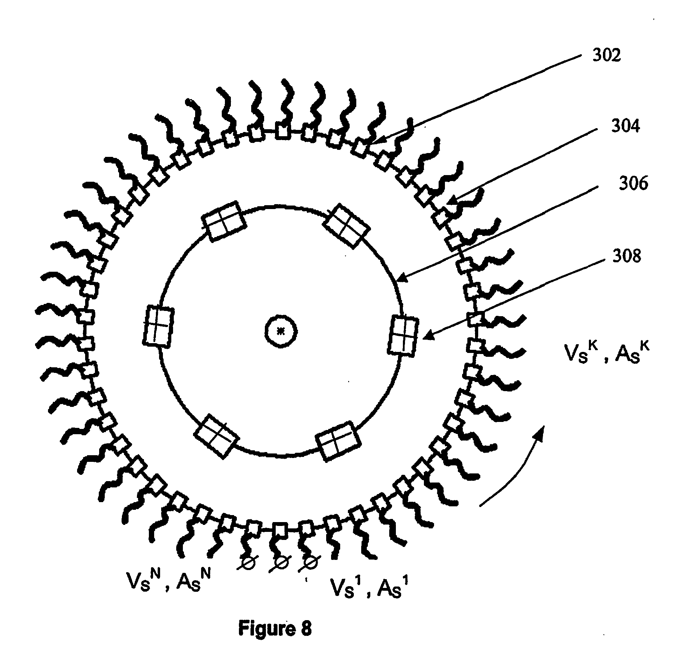

First, the simplest arrangement may be that shown on Figure 8, one embodiment of an adaptive electric machine with a rotor 306 with permanent magnets 308, and a stator 302 with electromagnets 304. It may have certain benefits, mostly cost, simplicity, and reliability related, but may also possess a major drawback. It may be impossible for its rotor 306 to freely rotate without inducing current in the electromagnetic system of the machine. For some applications, this is irrelevant. In other applications, this ability to freely rotate without inducing current may be highly desirable, as for example in transportation applications.

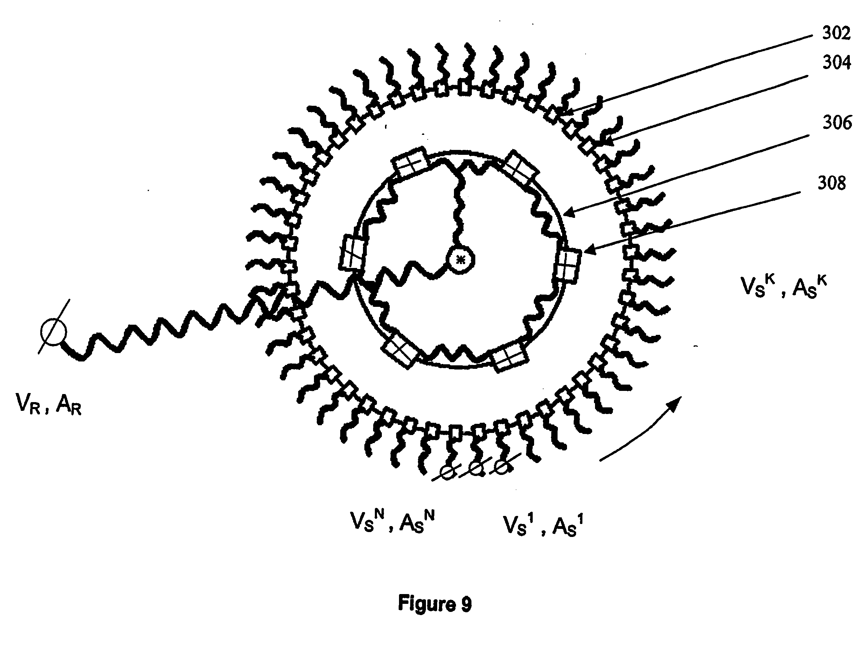

Figure 9 shows a slightly different arrangement, a so-called wound rotor, in which the magnets 308 in the rotor 306 are in fact electromagnets with separate excitation. This arrangement may create a somewhat more complex task of bringing power to the rotating parts of the machine, so it may incur additional costs and decrease reliability to some extent.

But a very important feature of this design may be that when the electromagnets 308 in the rotor 306 are not excited, the rotor 306 can freely rotate without inducing current in the electromagnet circuits 304 in the stator 302 - a highly desirable feature for any kind of transportation applications. Consequently, this type of adaptive machine may be very important.

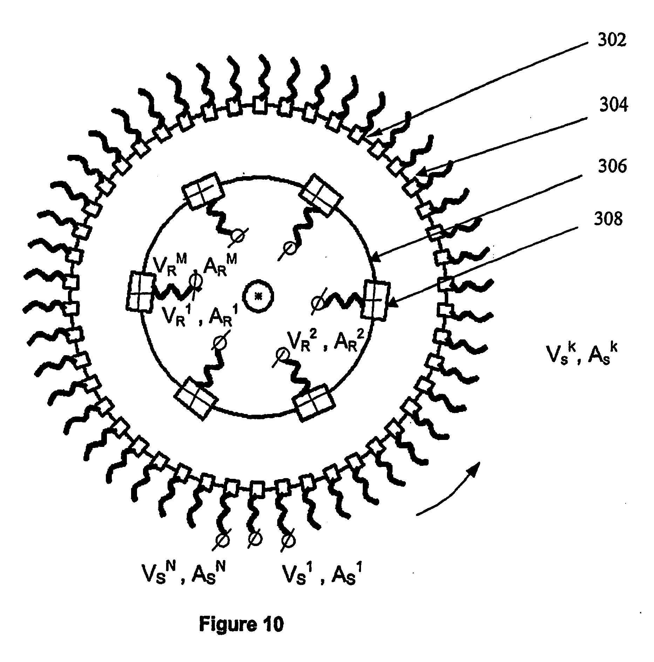

Finally, Figure 10 shows one embodiment of what may be the most general type of adaptive machine, one that may allow independent excitation of every magnet of the machine. The electromagnets 308 in the rotor 306 and the electromagnets 304 in the stator 302 may all be independently excited. Even though this design may offer the most flexibility and the greatest number of independent variables, the costs of its implementation may be high, and this design may be justified only in the most sophisticated applications.

Comparing one embodiment of an adaptive 1 kW electric motor to a conventional three-phase permanent magnet brushless motor design yielding approximately the same horsepower yields the results shown in the following tables. In addition to these results, it should be noted that the adaptive 1 kW electric motor described is operable at a speed ranging between at least 0 RPM and 500 RPM, at an efficiency not less than 80% at every speed between at least 50 RPM and 300 RPM.

Table 1: Comparison of measured values for one embodiment of an adaptive 1kW motor versus a conventional three-phase permanent magnet brushless motor design

|  | Adaptive 1 kW Motor | Conventional Three-Phase Motor |
| --- | --- | --- |
| Motor Poles | 16 | 12 |
| Teeth | 14 | 36 |
| Pole/Teeth Ratio | 1.14 | 3 |
| Winding Type | Salient | Distributed |
| Motor Diameter (mm) | 277 | 239 |

Table continued

|  | Adaptive 1 kW Motor | Conventional Three-Phase Motor |
|---|---|---|
| Stator Inside Diameter (mm) | 168 | 123 |
| Motor Height (mm) | 38 | 66 |
| Motor Volume (mm$^3$) | 2.29 x 10$^6$ | 2.96 x 10$^6$ |
| Voltage (VDC) | 36 | 145 |
| Peak Current (Amps) | 55 | 83 |
| Torque Constant (Nm/A) | 1.65 | 0.8 |
| Peak Motor Torque (Nm) | 80 | 70.5 |
| Motor Resistance (mOhms) | 0.157 | 0.150 |
| 70 Nm Calculated Resistive Power Loss (Watts) | 622 | 1033 |
| Calculated Motor Constant (Peak torque / square root of continuous power) (Nm/sqrt(Watt)) | 4.16 | 2.06 |
| Motor Mass (kg) | 5.9 | 8.1 |
| Calculated Electric Vehicle Constant (Motor Constant) /(Motor Mass) | 0.705 | 0.254 |

Table 2: Comparison of price, torque and weight for one embodiment of an adaptive 1 kW motor versus a conventional three-phase permanent magnet brushless motor design

|  | Adaptive 1 kW Motor | Conventional Three-Phase Motor |
|---|---|---|
| Motor Retail Price (estimated for greater than 1,000 unit production) | 1x | 3x |
| Electronic Drive Retail Price | (included in Motor Retail Price) | 2.5x |
| System (Motor and Drive) Retail Price | 1x | 5.5x |
| Peak Torque (Nm) | 80 | 70.5 |
| (System Price)/Peak Torque): Price/Nm x 100 | 1.25 | 7.8 |
| Motor Weight (lbs) | 18 | 34.1 |
| Electronic Controller Weight (lbs) | (included in Motor Weight) | 11 |
| System Weight (lbs) | 18 | 45.1 |
| (Peak Torque)/(System Weight): Nm/lb | 4.44 | 1.56 |

Table 3 below shows the performance of one embodiment of four 17 kW adaptive motors (providing a total of 68 kW through four motors of 17 kW each) compared with four other conventional motors. In addition to these results, it should be noted that the adaptive 17 kW electric motor described has a torque/volume ratio of 39,000 N/m$^2$.

Table 3: The performance of one embodiment of four 17kW adaptive motors (providing a total of 68 kW through four motors of 17 kW each) compared with four other conventional motors.

| Machine Characteristics | Adaptive Motor Design | Motor 1 | Motor 2 | Motor 3 | Motor 4 |
|---|---|---|---|---|---|
| Peak Power (kW) | 68 (17 kW in each of 4 motors) | 56 | 100 | 150 | 122 (30.5 kW in each of 4 motors) |
| Peak Torque (Nm) | 2600 | 1069 | 550 | 2750 | 1800 |
| Peak Voltage (Volts) | 42 | 500 | 300 | 220 | 220 |

Table continued

| Machine Characteristics | Adaptive Motor Design | Motor 1 | Motor 2 | Motor 3 | Motor 4 |
|---|---|---|---|---|---|
| Active Mass (kg) | 120 | 2000 | 86 | 220 | 116 |
| Torque Density (Nm/kg) | 21.7 | 0.5 | 6.4 | 12 | 15.5 |
| Notes | Brushless DC (four in-wheel motors) | Brushed DC | Brushless AC | Brushless AC | Brushless AC (four in-wheel motors) |

Table 4 below shows the performance of one embodiment of an adaptive generator compared with a conventional three-phase generator.

Table 4: Comparison of one embodiment of an adaptive generator with a conventional three-phase permanent magnet brushless direct drive generator design

| Machine Characteristics | Adaptive Generator Design | Conventional Three-Phase Generator |
|---|---|---|
| Rotor Magnet Poles | 96 | 96 |
| Stator Teeth | 72 | 288 |
| Pole/Teeth Ratio | 1.33 | 3 |
| Winding Type | Salient | Distributed |
| Stator Diameter (inches) | 54 | 54 |
| Motor Inside Diameter (inches) | 46 | 46 |
| Coil Winding Height (inches) | 8 | 8 |
| 120 RPM Output Voltage (VDC) | 700 | 700 |
| Peak Winding Current (Amps) | 142 | 77.5 |
| Peak Winding Voltage Constant (Volts/rad/sec) | 28 | 28 |
| Peak Generator Torque Output (Nm) | 7950 | 4340 |
| 120 RPM Peak Generator Power Output (Kw) | 100 | 54.2 |
| Generator Resistance (mOhms) | 78 | 172 |
| Hot Peak Resistive Power Loss (Watts) | 2200 | 1450 |
| Stator Core Material (kg) | 320 | 2220 |
| Stator Core Material Cost | 1x | 7x |
| 120 RPM Magnetic Core Loss (Watts) | 1100 | 1850 |
| Generator Constant (Nm/sqrt(Watt)) | 3.17 | 2.13 |
| Electromagnetic Generator Mass (kg) | 289 | 374 |
| Power Output Per Electromagnetic Generator Mass (kW/kg) | 0.346 | 0.145 |

Additional advantages of adaptive electric machines will be readily apparent to those skilled in this art. The following detailed description shows only a preferred embodiment or embodiments of the invention. The invention may be capable of other and different modes, and its several details are capable of modifications in various obvious respects, all without departing from the scope of the invention as expressed in the appended claims. Accordingly, the drawings and description are to be regarded as illustrative in nature, and not as restrictive.

**Brief Description of Drawings**

This invention is illustrated by way of example, and not by way of limitation, in the figures of the accompanying drawings.

Figure 1 shows a schematic representation of one conventional electric motor.
Figure 2 shows typical torque-speed envelopes and power-speed profiles for two conventional DC motors.
Figure 3 shows a schematic representation of one embodiment of an adaptive electric motor.
Figure 4 shows a typical goal function for a torque-speed profile (Figure 4(a)), for a speed-load profile (Figure 4(b)), and for an efficiency profile (Figure 4(c)).
Figure 5 shows a diagram of the forces in the magnetic system of one embodiment of an adaptive motor.
Figure 6 shows a diagram of the formation of different wavefronts in one embodiment of an adaptive motor.
Figure 7 shows some examples of waveform profiles that may be used for adaptive motor energization.
Figure 8 shows a schematic representation of one embodiment of an adaptive motor with a permanent magnet rotor.
Figure 9 shows a schematic representation of one embodiment of an adaptive motor with a wound rotor.
Figure 10 shows a schematic representation of one embodiment of an adaptive motor with independently energizable rotor electromagnetic circuitss. Figure 11 shows an example of: (a) a block diagram of a conventional electric machine and (b) a block diagram of one embodiment of an adaptive electric machine.
Figure 12 shows an example of a block diagram of one embodiment of an adaptive electric machine.
Figure 13 shows an example of a cutaway view of the basic structure of one embodiment of an adaptive electric machine that has seven electromagnetic circuits.
Figure 14 shows an example of an exploded view of one embodiment of an adaptive electric machine that has seven electromagnetic circuits.
Figure 15 shows an example of a three dimensional external view of the electric machine system of Figures 4 and 5, designed for use as an in-wheel motor for an electric vehicle.
Figure 16 shows an example of a block diagram of one embodiment of a control system that may be employed to drive an adaptive electric machine as an electric motor.
Figure 17 shows a more detailed block diagram of one embodiment of a control system implementation for an adaptive electric motor.
Figure 18 shows, for comparison: (a) a partial circuit diagram of one embodiment of an individual electromagnetic circuit for an adaptive electric motor, and (b) a partial circuit diagram of one embodiment of an individual electromagnetic circuit for an adaptive electric generator.
Figure 19 shows an example of a block diagram of one embodiment of an adaptive electric motor control structure with independent switch sets.
Figure 20 shows an example of a block diagram of one embodiment of an adaptive electric motor control structure with independent position sensors and switch sets.
Figure 21 shows an example of a block diagram of one embodiment of an adaptive electric motor control structure with independent position sensors, switch sets, and pulse width modulator generators, and with a digital signal processor.
Figure 22 shows an example of a block diagram that illustrates torque controller methodology for use in the control system of one embodiment of an adaptive motor.
Figure 23 shows a flow chart of the process of selecting a motor current waveform profile.
Figure 24 shows a curve that represents the boundary between profiles for various values of motor torque and speed.
Figure 25 shows the rectified output voltage of one embodiment of an adaptive electric generator.

**Detailed Description of the Invention**

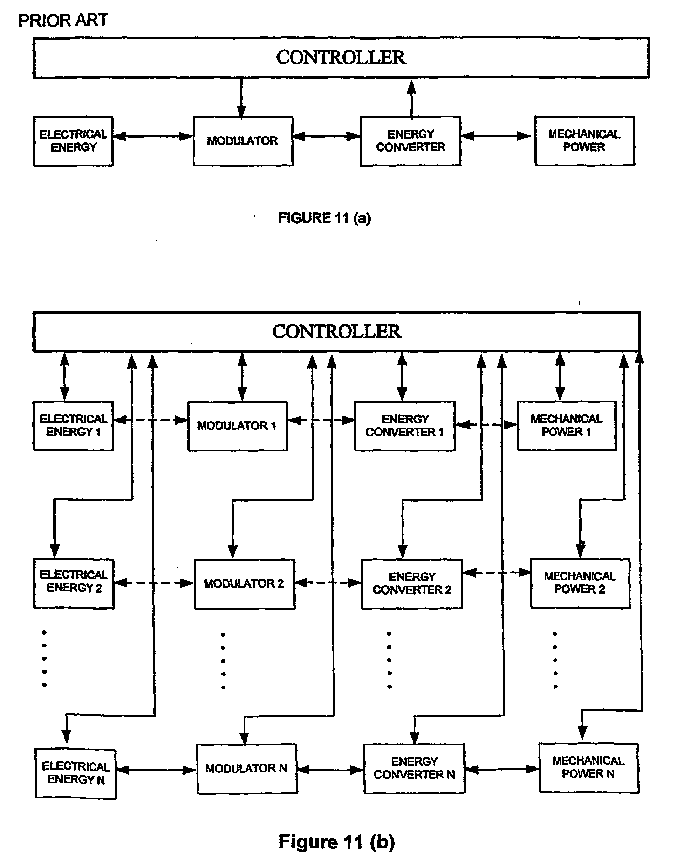

Throughout this detailed description of this invention, an electric machine designed in accordance with this invention will be referred to as an "adaptive electric machine" Figure 11 shows a block diagram of a prior art electric machine with "N" phases compared to an example of an adaptive electric machine with "N" phases. In this example, each of the phases of the adaptive electric machine corresponds to the single electric machine of the prior art. (In this description, the terms "electromagnetic circuit" and "phase" are generally used interchangeably.)

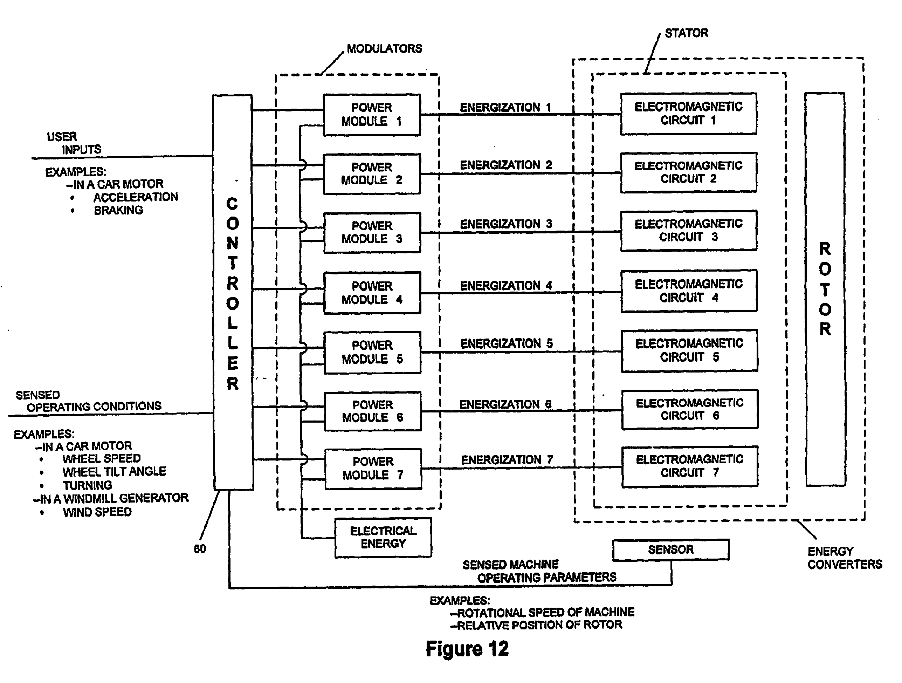

Figure 12 shows a block diagram of an example of one embodiment of an adaptive electric motor. In this example the controller 60 generates a control signal based on user inputs, sensed operating conditions, and sensed machine operating parameters.

User inputs are parameters that the user may vary during operation of the electric machine. A typical example is a throttle used to control speed of an electric vehicle, or a brake used to stop the vehicle. Machine operating conditions are conditions outside the machine that may affect machine operation. Examples include the speed of an electric car, or whether or not a car is turning. Machine operating parameters are parameters inside the machine. Examples include rotational speed of a motor and relative position of a motor's rotor to its stator.

In this embodiment, each electromagnetic circuit, or phase, may be sufficiently isolated from each of the other electromagnetic circuits to substantially eliminate electrical and electromagnetic interference between the circuits. This may increase the number of independent machine parameters that may be varied and controlled. As a result, this may increase the effective response of the electric machine to control and optimization.

In addition, each electromagnetic circuit, structurally and/or electromagnetically separated from each of the others, may receive a separate control signal from the controller, thus controlling the electrical flow in each group of electromagnetic circuits independently of electrical flow in each other group. That may allow each electromagnetic circuit, or phase, to be controllable independently of each other phase, and thereby establish relative rotation between the rotor and the stator at a speed and a torque that are dynamically selectable. The controller may be operable to optimize the efficiency of the electric machine for each selected speed and torque.

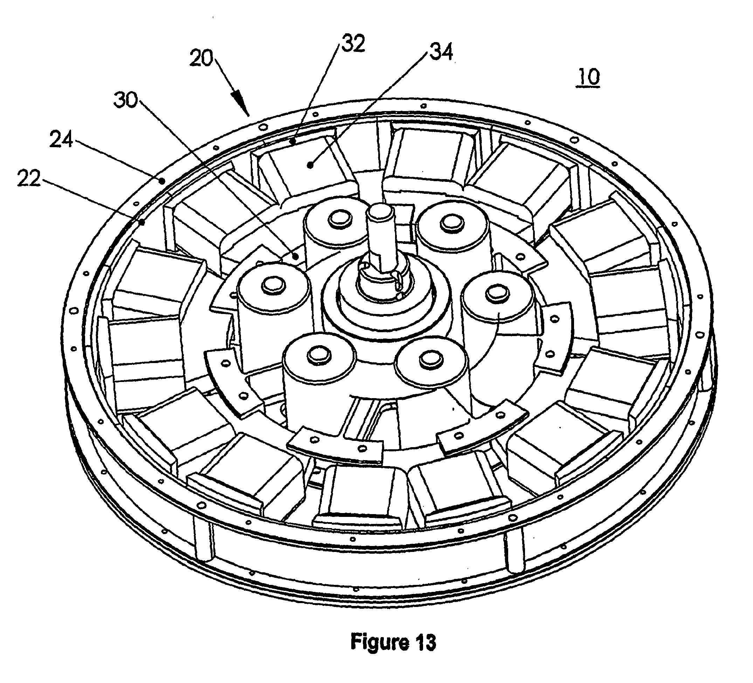

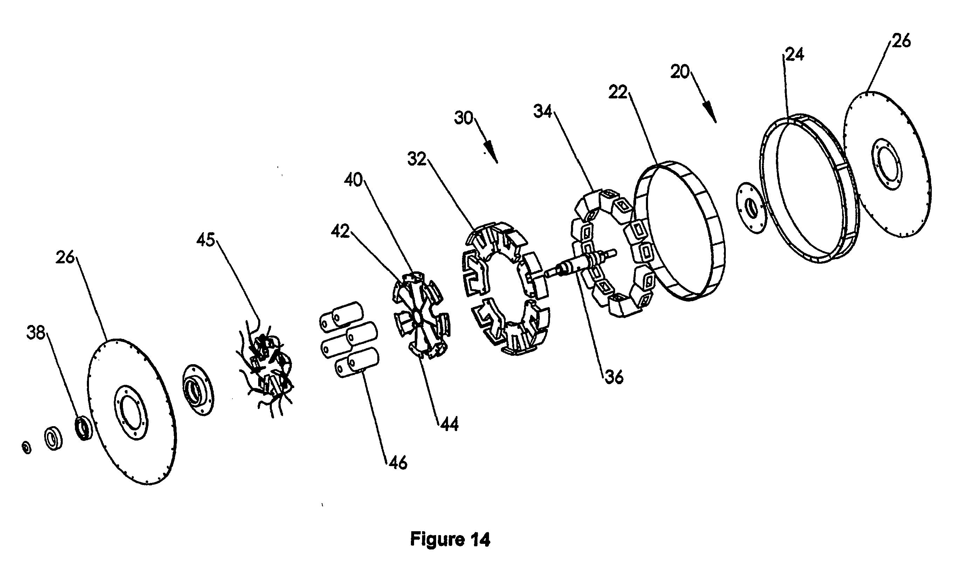

Figure 13 shows an example of a cutaway view of the basic structure of an embodiment of an adaptive electric machine 10. Some of the elements illustrated in Figure 13 are shown in more detail in the exploded view of Figure 14. In this example the electric machine 10 has a circular permanent magnet rotor 20 surrounding a circular stator 30. However, an adaptive electric machine may comprise a movable element other than a rotor, or a stationary element other than a stator, or comprise a first member and a second member, or at least one member.

In this example, the rotor 20 and the stator 30 may be separated by an air gap. The rotor 20 and the stator 30 may be centered on a stationary shaft 36, which is located at the axis of rotation for the rotor 20.

In this example, the stator 30 has seven ferromagnetically isolated elements, or stator or "core element" groups. Each stator group 32 may be made of magnetically permeable material, and may be separated from direct contact with each other stator group. Each stator group may form a separate electromagnetic circuit, each having windings wound on an independent portion of the stator, with each portion being structurally connected only by non-magnetic material. Or each stator group may have windings 34 formed on each of their two poles. Or an adaptive electric machine may have at least two windings, forming energizable electromagnetic circuits, wound on portions of either a movable element or a stationary element, or both.

Seven stator groups 32 are shown in this example, each group with two salient electromagnet poles, and each substantially equally spaced along the air gap. Each stator group may be sufficiently isolated to substantially eliminate electrical and electromagnetic interference (such as induced currents and electromagnetic flux) between the groups.

In this example the rotor 20 has sixteen permanent magnets 22. The illustrated permanent magnets may be substantially equally spaced along the air gap and affixed to a non-magnetic circular back plate 24. The back plate 24 may be formed of aluminum or other non magnetically permeable material. The back plate 24 may form part of the electric machine housing, which has side walls 26 attached to it.

The magnetic flux produced by the rotor's permanent magnets 22 may be enhanced by adding a magnetically permeable element (not shown) mounted to the back of the rotor permanent magnets 22. The number of stator poles and rotor magnets illustrated is merely exemplary. Various ratios may be used to provide desired operational parameters. For example, fewer electromagnets spaced at greater distances may produce different torque and/or speed characteristics.

The energization scheme and the pole geometry design of the electric machine 10 may be important design considerations. When designing an electric machine to operate as a motor, an objective is to minimize reluctance in the rotor/stator interface to achieve acceptable commutation torque signature, torque ripple and cogging torque while delivering the desired peak torque at no load maximum speed. These considerations may be taken into account by carrying out detailed finite element simulations to synthesize optimized resultant torque and force vectors. These simulation techniques are known to those skilled in the art.

In one embodiment the permanent magnets 22 may comprise Neodymium Iron Boron of a nominal BHmax or energy product ranging between 238 to 398 kJ/m 3 (30 to 50 MGOe). Shaping the magnets in rounded sectors with square cross sections and tapered edges may help minimize cross interference of unwanted magnetic flux. Preferably, the magnets 22 may be radially magnetized to provide strong magnetic dipoles perpendicular to the plane of the back plate 24 for each partitioned section of the rotor.

Optimizing the curved volumetric geometry of the magnets 22 may also optimize the permeance and the recoil characteristics of the magnet subsystem for an intended application. Further modifications may be made using three-dimensional pole shaping of the electromagnetic cores in order to correct the magnetic potential difference profile developed between the electromagnetic stator groups 32 and the permanent magnet rotor assembly. Doing so may reduce the cogging that could occur during the energization commutation and angular displacement of the rotor 20.

Several other parameters of the rotor 20 may be considered to achieve more optimal performance for a particular application. For example, some of these other parameters may include the following:

- grade of the magnet,

- energy density and the overall magnetic characteristics of the magnet grade,
- size and dimensions of the magnet to yield the required demagnetization factor, and thus the overall operating condition of the magnet assembly,
- magnetic configuration of the permanent magnets, as well as their polarization,
- thermal stability of the magnets,
- finishing and post processing steps taken in manufacturing of the magnets for the intended application,
- location and mounting separation of the magnets,
- surface and subsurface eddy current effects on the magnet segments at maximum angular velocity of the machine,
- homogeneity of the magnetization over the curvilinear surface of the magnet,
- uniformity of the radial and axial polarizations of the magnets,
- gap optimization between two separate adjacent magnets in the stator,
- mechanical features of the edges of the magnets, and
- return flux path of the magnet as provided by the back iron ring.

In the example shown in Figures 13 and 14, the side walls 26 of the electric machine may be removable to make it easier to take out and replace an individual stator group that may become damaged or in need of repair, without replacement of the entire unit. As each of the stator core segments 32 may be made interchangeable, maintenance of the stator 10 may be a relatively simple matter of inserting a spare stator core segment 32 at the appropriate mating position between the plates and connecting the ends of the windings.

The illustrated stator core segments 32 may be secured to a rigid skeletal structure 40 that may be centrally fixed to the shaft 36. Spine members 42, which may be equal in number to the number of stator groups, may extend outward from the center of the skeletal structure 40 to some U-shaped plates 44. The sides of the U-shaped plate 44 and the stator core segments 32 may contain mating holes by which the stator segments 32 may be fixed to the skeletal structure 40. Each U-shaped plate 44 may attach to an adjacent pair of stator core segments 32.

Each stator core segment 32 and adjoining pair of spine members 42 together define a space within which circuit elements may be contained. The rigid spine portions 42 have sufficient surface area to provide the necessary structural support as well as to accommodate circuit boards 45. A circuit board or hybrid module may be affixed to each spine portion in any conventional manner.

To enable complex three-dimensional topologies of the electromagnetic cores used in this machine, the required electromagnetic cores may preferably be manufactured from Soft Magnetic Composite ("SMC") powder alloys or alloyed sintered powder materials ("SPM"), as opposed to laminated electrical steel. These SMC and SPM alloys may allow stringent geometrical constraints and the required electromagnetic characteristics to be specified for the intended application, which may then be further contrasted with the designated electrical power requirements.

Moreover, SMC alloys may promote the realization of an acceptable specific power loss (W/kg) and relative permeability at the application flux density levels and excitation frequencies. This may allow a desired peak torque output to be achieved, with a significant reduction in material weight and manufacturing overheads.

Use of SMC materials may promote the construction of electrical machines with complex magnetic paths and three-dimensional magnetic field distribution, an advantage that may stem from the anisotropic nature of the SMC materials. With the ability to define the magnetic field in three dimensions, the flexibility of the powder metallurgy may allow efficient production of complex shaped parts as well as a significant streamlining of the electromagnetic design assembly with an increase in effective power output and weight reduction.

Several known wet and dry compaction methods and heat treatment techniques are available to achieve the desired densities, and thus desired magnetic properties, in these SMC materials. Due to the compaction and the heat treatment of the SMC materials, the electrical conductivity achieved may be as high as 1,000 S/m, with reduced but adequate levels of permeability at critical induction levels. Such high conductivity may considerably reduce the eddy current loss at elevated inductions and high magnetic field excitation frequencies (i.e., high angular velocities of the motor).

These intrinsic characteristics are believed to play an important role in the reduction of eddy current as well as excess eddy current losses under high operating flux densities and excitation frequencies. However, the SMC materials may tend to exhibit higher hysteresis loss due to their non-ideal grain structure formation, compounded by large non-uniform strains induced onto the powder lattice during compaction.

Considerations for such loss constituents may be very important in machine efficiency calculation as well as core losses minimization in the magnetic assembly of the machine. This in turn may influence the provisions that may be put in place for adequate thermal management and cooling of the electric machine.

Soft Magnetic Composites may also exhibit good dimensional accuracy and stability with smooth surface finishes, which may be an important factor in the design of the excitation coils, and even more so in the thermal management of the integral electromagnetic circuits. With the ability to define the magnetic field in three dimensions, significant improvement may be achieved in increasing the torque and the reducing the excess weight of the machine, by designing a streamlined magnetic circuit with optimized magnetic geometries and high torque / net weight ratios.

The required core geometries and core dimensions along with their relevant tolerances may be optimized using known three-dimensional finite element simulation and synthesis techniques in order to maximize the magnetic potential gradient of the magnetic field developed between coupled pole pairs of rotor permanent and stator electromagnets. The changes in the magnetic potential difference give rise to tangential and radial forces, which may be generated between the partially aligned electromagnet poles and the permanent magnet poles. The moments of these forces acting around the pivoting shaft of the system generate resultant torque of a motor under a given excitation current density, or induce current in the core windings when an electric machine may be acting as a generator.

Several other parameters of the stator 10 may be adjusted to achieve more optimal performance for a particular application. For example, some other parameters may include the following:

- design of the electromagnetic circuits,
- pole to pole separation and isolation of the electromagnet cores,
- magnet / electromagnet permissible air gap,
- power loss of the core material (hysteresis / eddy current / anomalous loss),
- saturation flux density and permeability of the material,
- thermal management temperature and physical stability,
- mechanical rigidity and environmental stability,
- excitation current, phase angle, duty cycle, overall sequencing and the control strategy of the stator system in a given application
- optimal angular positioning with respect to the chosen energization scheme, and
- variation of the phase reluctance and thus the inductance with respect to angle

Existing technology and topology designs may not allow the intrinsic, dynamic characteristics of a motor to be altered, except to the extent that a fairly complex driving method were implemented to change the excitation profile or phase angle of the driving current. This may typically be implemented as either a change in phase advance or current waveform. If instead, a method for current or magnetic potential integration could be embedded within the core design of the electromagnetic circuit of the motor, the need for costly current sensing hardware might be eliminated.

This method may be applicable in the winding configuration and the topology of the electromagnetic cores used in adaptive electric machines, more applicable than in existing designs. These designs may allow a unique method of magnetic field integration to be done in the core - a reconfiguration of the flux distribution within the core - thus allowing different air gap flux densities to be developed in the rotor/stator interface. These air gap flux density variations may promote a wide servo operation range for the motor, which was inherently limited in most axial and radial designs disclosed thus far.

This may be ideally suited to applications where high torque and fairly large speed range is expected from the same magnetic circuit, without any complex excitation or current magnet circuitry. The design and the implementation of this may be based on the formability of the core design and also on the high machine form factor, which is normally achieved using Soft Magnetic Composite materials.

Control circuitry is needed to control the electrical flow to each of the electromagnetic circuits wound on portions of the stator 10. Each circuit board contains the control circuit elements and switches needed for applying current through appropriate wiring connections to energize the winding of a stator core segment 32 to which the spine portion may be attached. All control circuit elements and switches may be integrated into a single circuit board to provide even greater economy of space and weight. However, close proximity of the power leads to the electromagnets may cause electromagnetic and radio interference issues that will need to be addressed.

A power source provides the current to energize the stator core segments 32, or electromagnetic circuits. When the electric machine is intended for use primarily as a motor, the motor power supply, represented by batteries 46, may also be self-contained within the stator spaces. Appropriate receptacles (not shown) for the batteries may be fixed to the spine portions 42. The receptacles, which may be of any conventional variety, may permit easy removal of the batteries for replacement or recharge.

While a single battery for each space is shown, any commercially available battery type or battery pack that may be of sufficient capacity to supply the necessary motor power may be used. Thus, depending on particular battery characteristics and motor drive requirements, it may be possible to use one or more spaces for location of other elements.

When the electric motor is used primarily as a generator, the stator spaces may be used for the control system. This may eliminate the need for a separate control box, an advantage for applications like a windmill generator, where space within the turbine housing may be at a premium.

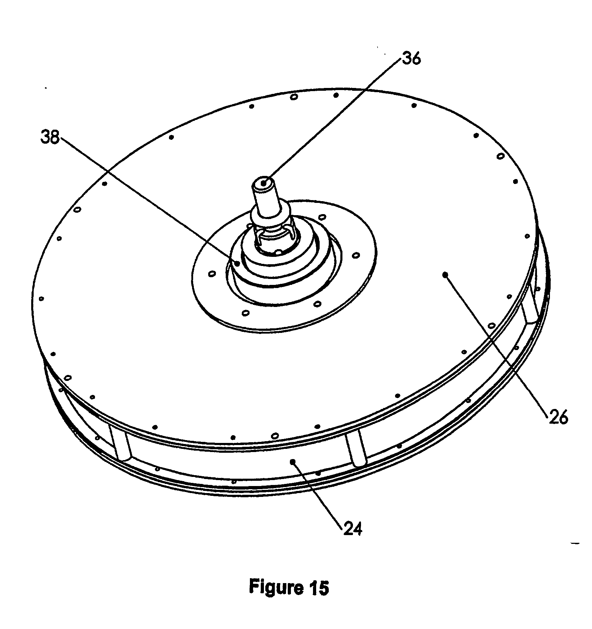

Figure 15 shows an example of a three dimensional external view of the electric machine system of Figures 13 and 14, designed for use as an in-wheel motor for an electric vehicle. In this example, the rotor housing outer ring 24 and the side walls 26 may be configured to form a wheel hub on which a tire (not shown) may be mounted directly or indirectly via spokes. The rotor wheel housing may be journalled for rotation about the stationary shaft 36 via bearings 38. The cylindrical rotor housing structure may surround the stator structure.

There are a variety of different ways in which the structure of the stator 10 and the rotor 20, and their elements, may be modified. For example, in one variation, the poles within each stator group may be separated by radial gaps that may be uniform for all stator groups. The extent of these gaps may be different from the spacing between the poles of adjacent stator groups. The stator pole gaps and the group spacings may each be different from the rotor angular pole gaps.

The radial extent of the stator annular structure, i.e., the distance between inner and outer diameters, may be substantially less than the distance between the center axis of rotation and the inner diameter of the stator. This relatively narrow radial stator dimension may provide a favorable concentration of flux within each stator element structure focused at the air gap. By virtue of this configuration, and the absence of stray transformer flux effects from adjacent stator core element groups, high torque output may be more efficiently obtained.

Figure 13 shows 14 stator poles (in seven stator pole groups) and 16 rotor poles. However, the relatively independent dimensional relationships between the stator and rotor poles permit flexibility in setting the number of poles and dimensions. An odd, or preferably a prime, number of stator pole groups may be preferred to enable optimal performance. The number is by no means limited to seven, which is disclosed herein for purposes of illustration only. Similarly, each stator core element (or stator pole) group may comprise just one core element (or stator pole pair), or may comprise a plurality of core elements sharing a common isolated magnetically permeable structure. Each stator core element group may be associated with a phase of a multiphase machine.

In an operational environment in which it may be desirable to obtain fine control over a wide speed range, a large number of stator and rotor poles may be implemented. Such implementation may be coordinated with the control capabilities of control system to be used, the number of separate stator core element groups also being set accordingly.

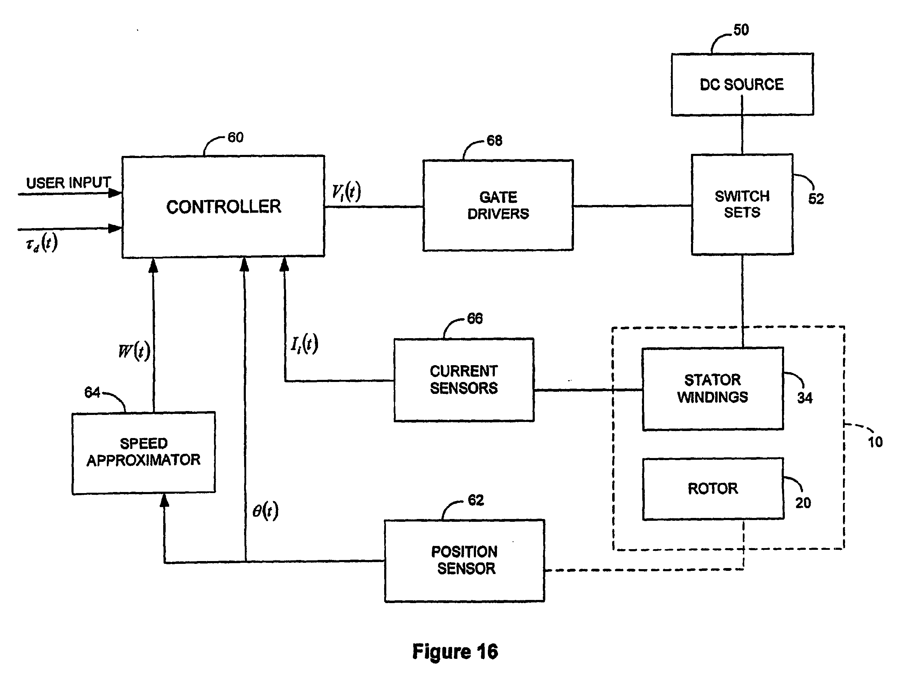

Figure 16 shows a block diagram of an example of a typical control system that may be employed to drive the electric machine shown in Figures 13 through 15 as an electric motor. In this example, the stator windings 34 may be energized by driving current supplied from a power source 50 via electronic switch sets 52. A MOSFET H-bridge, such as International Rectifier IRFIZ48N-ND, may be used as an electronic switch set. Timing of the current pulses may be subject to the control of a controller 60.

The controller 60 may respond to feedback signals received from a position sensor 62, and also to a speed approximator 64. Current in each phase winding 34 may be sensed by one of seven current sensors 66, and the output for each phase winding may be provided to the controller 60. A Hall-effect current sensor, such as F.W. Bell SM-15, may be used. In addition, the controller 60 may be able to receive various other inputs, as shown in Figure 12.

The controller 60 may include a microprocessor or equivalent microcontroller. In one embodiment, a Texas Instrument digital signal processor TMS324LF2407APG may act as the controller.

In the embodiment shown in Figure 16 the position sensor 62 is schematically represented by a single unit. Alternatively, several sensors may be appropriately positioned at stator sections along the air gap to detect rotor magnet rotation. The position sensor 62 may be any known magnetic sensing devices (such as Allegro Microsystems 92B5308 or another Hall effect device), a giant magneto resistive (MGR) sensor, a reed switch, a pulse wire sensor including an amorphous sensor, a resolver or an optical, magnetic, inductive or capacitive sensor.

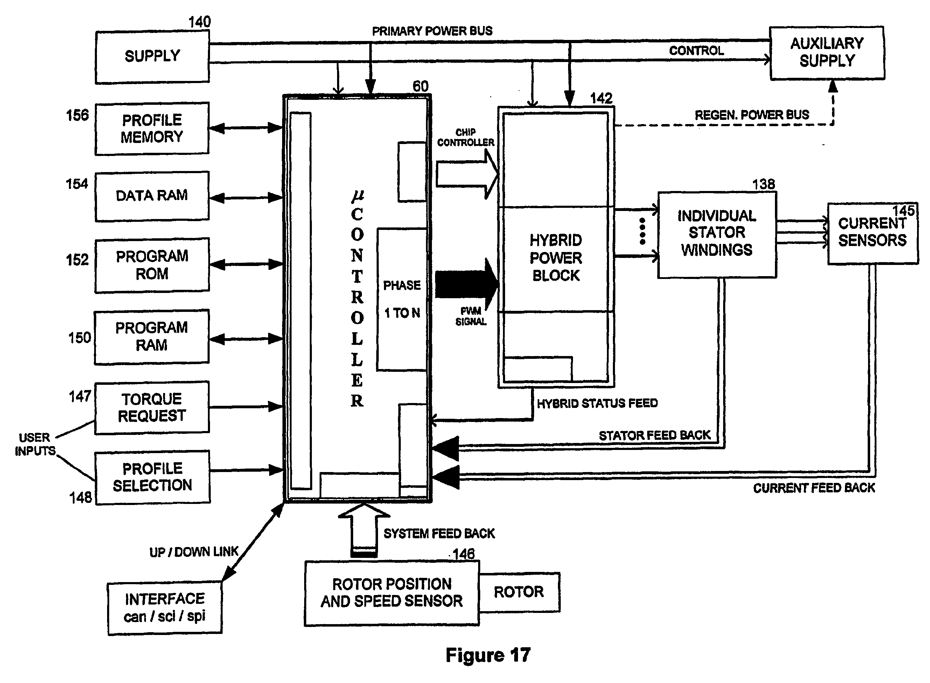

Figure 17 shows a more detailed block diagram of an example of a control system implementation for an adaptive electric motor. The control system implementation for an adaptive electric generator may differ in some respects.

In Figure 17, a DC power source 140 may provide energization to two or more multiphase motor stator phase windings 138 via a hybrid power block 142. As described in more detail in referring to other Figures, the power block 142 may comprise electronic switch sets that are coupled to controller 60 by a pulse width modulation converter and gate drivers. Each phase winding may be connected to a switching bridge having control terminals connected to receive pulse modulated output voltages from the controller. Alternatively, the switching bridges and gate driver components may be replaced by amplifiers linked to the controller output voltages.

Current sensors 145 may separately sense the current in each of the phase windings, and provide that information to the controller 60. The controller 60 may have several inputs for this purpose, or signals from the current sensors may be multiplexed and connected to a single controller input.

A rotor position and speed sensor 146 may provide rotor position and speed feedback signals to the controller 60. The sensor may comprise a well known resolver, encoder or their equivalents and a speed approximator that converts the position signals to speed signals in a well known manner.

A primary power supply bus may connect the controller 60 to the power supply 140. User inputs, including a torque request input 147 and a profile selection input 148, may also come into the controller 60. Also coupled to the controller 60 may be program RAM memory 150, program ROM 152, data RAM 154 and profile memory 156. These illustrated units are merely representative of any well known storage arrangements by which the controller may access stored random data and program data.

A profile memory 156 is shown separately in Figure 17 for purposes of illustration of the inventive concepts. The profile memory may comprise a ROM in which are stored the portions of the motor control scheme programs that dictate the motor current waveform profiles obtained with implementation of the associated control schemes. The profile memory data may be stored in the form of a profile functions library and/or lookup tables. The profile memory data structure may be in the form of real-time calculations and optimization routines. As an alternative, or in addition, to ROM, a unit can be provided that calculates values during real-time motor operation.

In the vehicle drive application example, the torque request input 147 may represent torque required by the user's throttle. An increase in throttle may be a command to increase speed, which may be achieved by increasing torque. Or it may be a command to increase torque in order to maintain the same speed of a vehicle under heavy load conditions, such as uphill driving.

In operation, the control system torque tracking functionality should maintain steady state torque operation for any given torque request input through varying external conditions, such as changes in driving conditions, load gradient, terrain, and the like, and should adapt to the driver's throttle commands. The control system may respond to torque input requests differently depending on the particular motor control scheme implemented.

Having a choice between two or more motor control schemes may allow the user to obtain an appropriate response. Each control scheme may generate a particular motor current waveform profile having unique characteristics with respect to efficiency, torque capacity, response capability, power losses, and the like.

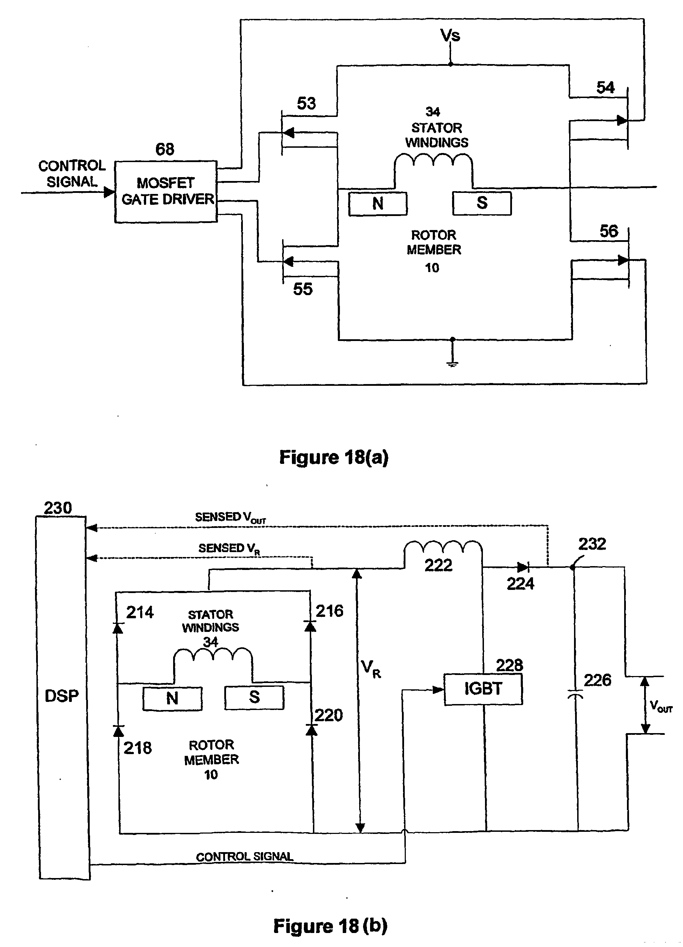

The use and control of electronic switches for application of energizing current to motor windings are known in the art. Figure 18(a) shows a partial circuit diagram of an example of a switch set and driver for an individual stator core segment winding. Each stator winding 34 may be connected in a bridge circuit of four FETs acting as a switch set 52. Note that this bridge for pulse width modulation may be a full or a half bridge circuit depending upon the level of integration required. Any of various known electronic switching elements may be used for directing driving current in the appropriate direction to the stator windings 34 such as, for example, bipolar transistors.

Two FETs (53 and 55) on the left side of the bridge may be connected in series across the power source, as may two other FETs (54 and 56) on the right side of the bridge. The stator windings 34 may be connected between the connection nodes of the two series FET circuits. The gate driver 68 responds to control signals received from the controller 60 to apply activation signals to the gate terminals of the FETs.

The top, left FET 53 and the bottom, right FET 56 may be concurrently activated for motor current flow in one direction. For current flow in the reverse direction, the top right FET 54 and the bottom, left FET 55 may be concurrently activated. The gate driver 58 may be integrated in the controller 60 or comprise a separate driver circuit.

The controller 60 may be programmed to output optimally timed control signals to be matched with the received encoder signals, based on the specific dimensional configuration of the stator elements. Programming can thus take into account the number of stator and rotor poles, the number of stator groupings, the dimensions of the stator and rotor poles and the dimensions of the various gaps in the motor structure.

When the controller 60 is programmed to do so, the superior motor torque and speed characteristics that may be obtained from an adaptive electric machine may enable satisfactory operation even if one or more individual stator element groups cannot function. Thus a motor or generator with one or more non-functioning stator element groups can continue to be used until it may be convenient to replace the stator element group.

In this embodiment it may be important for the controller 60 to be programmed with the appropriate control system for each electric machine application. When these control systems are designed and implemented, it may be important to address two major groups of questions. First, structure - designing the structure of the control system to make implementation of the desired control algorithms possible and efficient. Second, algorithms - creating, designing, and developing the controls algorithms defining the exact parameter values to be supplied to the machine and its controls to produce desired operation.

As shown in the example illustrated in Figure 12, a controller 60 may be able to receive at least three kinds of inputs. In this example the first inputs may comprise user inputs, such as desired acceleration or braking for a vehicle motor, for example. Second, sensed operating conditions of the machine, as for example, in a vehicle motor, things such as wheel speed, tilt angle of the wheel, and angle that the vehicle may be turning; or in a windmill generator, the wind speed and variation in the wind speed. Third, sensed machine operating parameters, such as the rotational speed of the electric machine and relative position of the rotor.

An example of an embodiment of a control structure is presented in Figure 16, where the power source provides energization to multiple independent switch sets 52 each connected to respective motor winding or windings 34 in parallel, series, or more complex commutated arrangements. At least, position sensing is preferably provided for the motor. Note that each motor may need to have its independent absolute angular position sensor. This could be based on any of several technologies, such as optical, inductive, capacitive or magnetic.

As those skilled in the art will realize, other sensing can also be done, such as sensing motor rotational speed, applied torque, motor temperature, fault detection, and per-phase currents. Information from the sensors may go to the controller 60, which may be responsible for the implementation of the specific motor control scheme based on the inputs from the sensors and, possibly, additional inputs from the operator and environment of the motor.

Generally, the electronic switch sets in the controller 60 may be commutating H-bridges, which may preferably be made using MOSFET transistors, IGBT transistors, thyristors, and other similar devices that are well known to those skilled in the art. One potential implementation of the switch is shown in Figure 18(a), where MOSFET transistors may be driven by the gate driver based on the control signals from the controller 60.

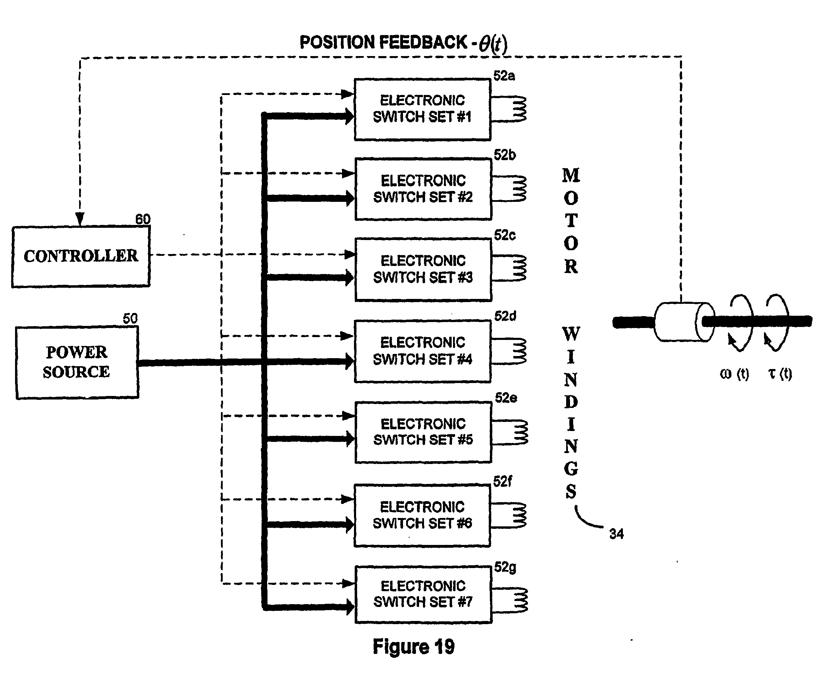

Figure 19 shows an example of a control structure. In this example all of the switches (52a to 52f) and all of the motor windings 34 may be mutually independent. Consequently, any fault or malfunction of one or more of the windings may not cause any malfunction in the rest. As mentioned below, fault conditions may be overcome by using special control algorithms designed to keep the motor's operations as close to normal as possible.

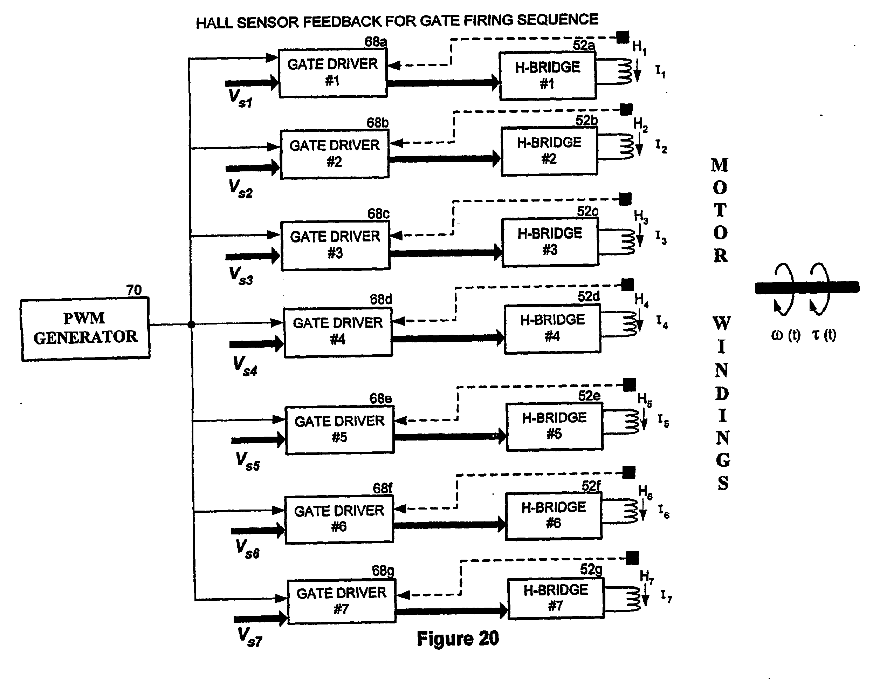

Figure 20 shows an example of an arrangement where the motor's fault tolerance may be even higher than that shown in Figure 19, where the controller 60 might be a single point of failure. In the design shown in Figure 20, all position sensing may be done on a per phase basis independent from other phases, and gate drivers (68a to 68g) with their logic (acting as the controller 60) may be separate and independent from each other as well. The gate driver may be, for example, Intersil MOSFET gate driver HIP4082IB.

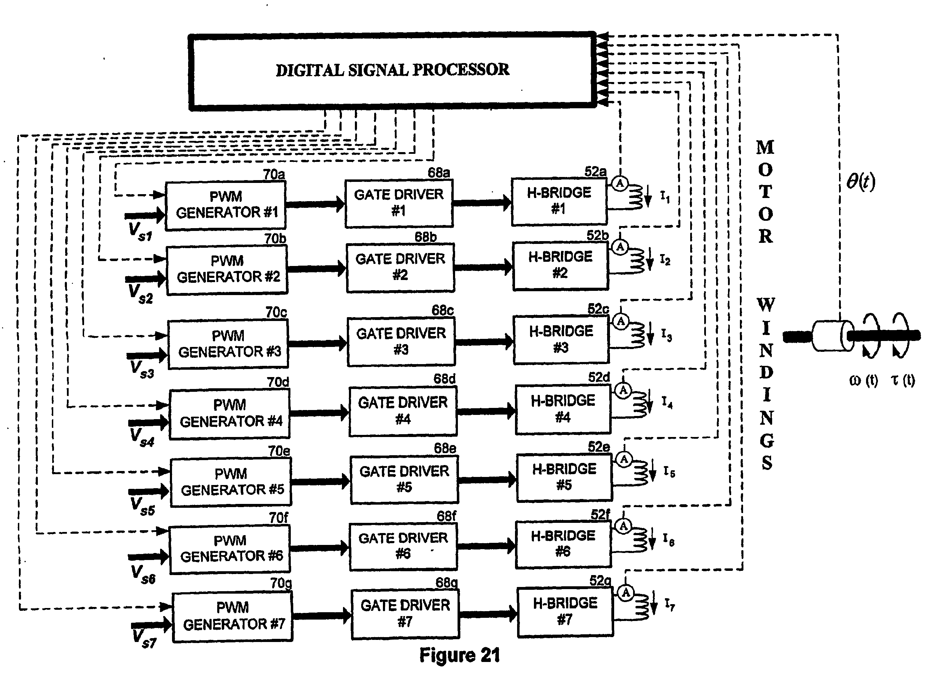

In the example shown in Figure 20, the phases may share a pulse width modulation generator 70, but that may also be cloned as shown in Figure 21. The example shown in Figure 21 also introduces a digital signal processor, which may control the functioning of the pulse width modulation generators and use individual, per phase current inputs to create the possibility of implementing closed-loop current or torque tracking algorithms.

A variety of different algorithms may be implemented in the controller 60 to achieve optimal results. For example, a controller for an adaptive electric motor may use a torque tracking control scheme. The control system might be designed to maintain steady state operation when the operator commands do not change, even if there are changes in operating conditions, such as changes in required speed, acceleration, torque or other parameters. The control system might also be designed to respond to operator speed input to accurately and smoothly accommodate changes in torque commands.

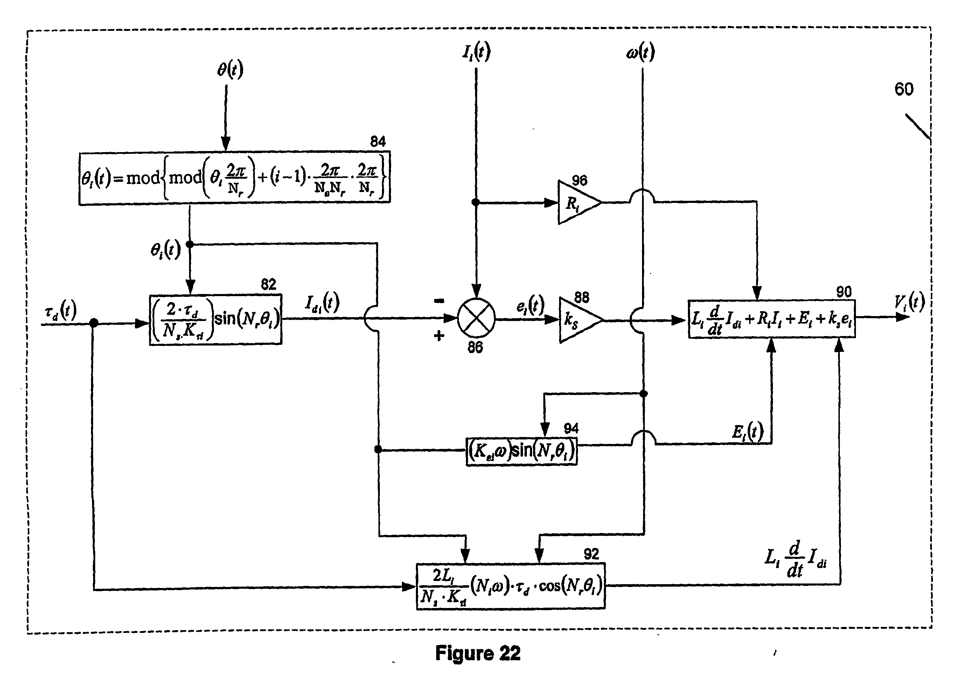

The block diagram in Figure 22 illustrates an example of a torque controller methodology. This example may use feedforward compensation expressions that take into account sensed motor operating conditions as well as individual circuit parameter values to obtain these objectives. For precision torque tracking in this example, the per-phase desired current trajectories may be selected according to the following expression:

$$I_{di} = \left( \frac{2\tau_d}{N_s K_{\tau i}} \right) \sin\left( N_r \theta_i \right)$$

where $I_{di}$ denotes per-phase desired current trajectory, $\tau_d$ denotes the user's requested torque command, $N_s$ represents the total number of phase windings, $K_{\tau i}$ denotes a per-phase torque transmission coefficient and $\theta_i$ represents relative positional displacement between the $i^{th}$ phase winding and a rotor reference point. The per-phase current magnitude may be dependent on the per-phase value of the torque transmission coefficient $K_{\tau i}$.

To develop the desired phase currents, the following per-phase voltage control expression may be applied to the driver for the phase windings:

$$V_i(t) = L_i dI_{di}/dt + R_i I_i + E_i + k_s e_i$$

Figure 22 illustrates an example of the methodology, generally indicated by reference numeral 80, by which the controller may derive the components of this voltage control expression in real time, using the torque command input and the signals received from phase current sensors, a position sensor and a speed detector.

In this example the external user requested (desired) torque command $\tau_d(t)$, responsive to the throttle, may be input to controller function block 82. The rotor position $\theta$ may be input to controller function block 84. Block 84 may produce an output representing excitation angle $\theta_i(t)$ based on the rotor position, the number of permanent magnet pole pairs ($N_r$), the number of stator phases ($N_s$), and the phase delay of the particular phase. The output of the controller function block 84 may be fed to the controller function block 82.

Using the excitation angle input thus received, the controller function block 82 may determine, in accordance with the expression set forth above, how phase currents are distributed among the $N_s$ phases, such that the user-requested torque $\tau_d(t)$ can be developed by the motor. The controller function block 86 may calculate the difference between the desired phase current $I_{di}(t)$ received from the block 82 and the sensed phase current $I_i(t)$ to output a phase current track error signal $e_i(t)$. This error signal may be multiplied by gain factor $k_s$ in the controller function block 88.

An effect of the current feedback gain may be to increase overall system robustness via the rejection of system disturbances due to measurement noise and any model parameter inaccuracies. The output of the block 88 may be fed to the controller function block 90. The block 90 may output time varying voltage signals $V_i$ (t) to the gate drivers 52 for the selective controlled energization of the phase windings 34. $V_i$ (t) may have components that compensate for the effects of inductance, induced back-EMF and resistance.

To compensate for the presence of inductance within phase windings, the term $LdI_{di}/dt$, wherein $dI_{di}/dt$ denotes the standard time derivative of the desired phase current $I_{di}$ (t), may be input to the controller function block 90 to be added in the phase voltage calculation. Determination of $LdI_{di}/dt$, may be made at controller function block 92, acting upon the received inputs of $\tau_d$(t), $\theta_i$(t) and $\omega$ (t).

To compensate for the induced back-EMF voltage the term $E_i$ may be added in the phase voltage calculation as an input to function block 90 from controller function block 94. The back-EMF compensation value may be derived from the excitation angle and speed, received as inputs to block 94 using back-EMF coefficient $K_{ei}$. To compensate for field weakening due to voltage drop in the winding resistance and parasitic resistance, the term $R_i I_i$(t) may be added in the phase voltage calculation as an input to function block 90 from controller function block 96.

In operation, the controller 60 may successively output control signals $V_i$ (t) to the gate drivers 68 for individual energization of respective phase windings. This individual energization may be controlled by the controller 60 in accordance with a selected motor control scheme. The gate drivers 68 may activate the respective switch sets 52 so that the sequence in which windings are selected comports with a sequence established in the controller 60. The sequence may be transmitted to the gate drivers 68 through the link only generally illustrated in the diagram of Figure 22.

Each successive control signal $V_i$ (t) may be related to the particular current sensed in the corresponding phase winding, the immediately sensed rotor position and speed, and also to model parameters, $K_{ei}$ and $K_{\tau i}$, that have been predetermined specifically for the respective phases. Thus, for each derived control signal $V_i$ (t), in addition to receiving timely sensed motor feedback signals, the controller 60 may preferably access the parameters specific to the particular phase to which the control signal corresponds.

The controller 60 thus may have the ability to compensate for individual phase characteristic differences among the various stator phases. To prevent over/under compensation of the voltage control routine, the per-phase circuit parameters utilized may be exactly matched to their actual phase values.

The per-phase torque transmission coefficient $K_{\tau i}$ may capture the per-phase torque contribution of each phase. This parameter may be proportional to the ratio of the effective torque generated per current applied for that phase. The torque developed by the phase may be a function of the effective magnetic potential differential developed in the air gap between the core and the permanent magnet, which produces the effective air gap flux density.

The design of the electromagnetic core geometry may take into account current density, which may be a function of the ampere-turns on each portion of the core in order to optimize induction in the material without driving the core into saturation. However, the magnetic properties of the core material may often be non-homogeneous throughout the stator core. If the motor is configured with separated, electromagnetically isolated electromagnet cores, inconsistencies may be even more pronounced.

Variations in winding and inductance may also contribute in determining the torque constant and the back-EMF coefficient parameters. There may be degradation in the effective flux buildup in the core if air pockets are formed in the windings. Although high packing factors may be achieved through uniform winding, there may be variations in wire manufacturing. Thus, if a nominal motor torque transmission coefficient and a nominal back-EMF coefficient are used by the controller, the variation in properties of the phases may produce overall motor output torque ripple.

The torque controller methodology example that is illustrated in Figure 22 may avoid this problem by applying the per-phase torque transmission coefficient and back-EMF coefficients predetermined for each phase.

The computations illustrated in Figure 22 may be performed successively in real time. The expression shown in the block 82 may be selected to provide the desired currents for tracking torque in one embodiment. This expression may be modified if factors other than efficient torque tracking are also of significance. For example, other objectives may include higher speed, extended range, greater torque, or the like. The expression in the block 82 thus may be changed to accommodate additional considerations.

The controller methodology example illustrated in Figure 22 may be performed in an integrated execution scheme in which particular phase parameters may be substituted for each generated control voltage output. Alternatively, the controller 60 may provide a separate control loop for each stator phase n, as represented for example in the partial block diagram illustrated in Figure 12.

For each of the $N_s$ motor phases, a corresponding control loop $60_i$ may be provided. Each control loop may contain the relevant parameters for the respective motor phase. The control loops may be activated in accordance with an appropriate motor phase energization sequence and need only the sensed motor feedback signals for generation of the control voltages.

In an alternative embodiment of the control methodology illustrated in Figure 22, the desired per-phase current $I_{di}$ (t) may be determined in real time from the received inputs of $\tau_d$ (t), $\theta_i$ (t) by reference to values stored in look-up tables. Look-up tables may be provided for each stator phase.

The expression shown in block 82 of Figure 22 in this motor control scheme may provide the desired current component for the tracking torque output control signal $V_i$ (t) with a sinusoidal waveform profile. The sine wave current trajectory $I_{sin}$ (t) may be generated from the following equation

$$I_{sin} = I_m \sin (N_r \, \theta_i)$$

where $I_m$ denotes the phase current magnitude, $N_r$ denotes the number of permanent magnet pairs and $\theta_i$ denotes the measured per phase rotor position signal. This sinusoidal current waveform profile may provide more efficient motor operation.

Different expressions for block 82 may be used for the torque tracking functionality of Figure 22 to obtain different current waveform profiles for manifesting other operational aspects, although perhaps sacrificing some of the efficiency achieved with the sinusoidal waveform profile. For higher torque operation, the expression of block 82 shown in Figure 22 may be replaced with an expression yielding a square wave current waveform trajectory $I_{sq}$ (t), such as

$$I_{sq} = I_m \, \mathrm{sgn} \, (\sin (N_r \, \theta_i))$$

where sgn (x) denotes the standard signum function and is defined as 1 if x > 0, 0 if x = 0, and -1 if x < 0.

The profile memory 156 shown in Figure 17 may store data that may be used by the controller 60 to obtain the current values that satisfy the expressions exemplified above. For the square wave profile, the expression $L_i dI_{di}/dt$ may be prestored. The data may be stored as lookup tables in a profile functions library, each motor control scheme having a corresponding lookup table. Each entry in a lookup table may represent a value of current, shown as the output of block 82 in Figure 22, for a particular combination of torque request value and rotor position for the corresponding motor control scheme.

If a control scheme is selected for which the sinusoidal waveform is produced, the corresponding profile memory data may be accessed. Square wave profile memory data may be accessed if the corresponding control scheme is selected. Alternatively, the profile memory may store data for each profile with which the desired current value $I_{di}$ is repeatedly computed by the controller in real time. While expressions for sinusoidal and square wave waveforms have been set forth above for purposes of illustration, other waveform profiles may be utilized for different operational purposes. Figure 7 shows some examples of waveforms that may be used..

For example, a sinusoidal waveform profile may be used to extend battery life through its more efficient operation. However, in most cases, a power supply is rated for a maximum current discharge rate (such as 10 amps). Therefore, if the user requests a torque command that correlates to a 10 amp maximum current draw, the motor output may be limited to approximately 54 Nm for the sinusoidal current profile.

If the user wishes to generate more torque than the sinusoidal waveform profile can provide, the controller may switch to a square wave profile. The square wave profile may produce approximately 68 Nm without exceeding the 10 amp maximum rating of the power supply. However, the power loss may increase from approximately 140 W for the sinusoidal motor control scheme to approximately 250 W for the square wave motor control scheme.

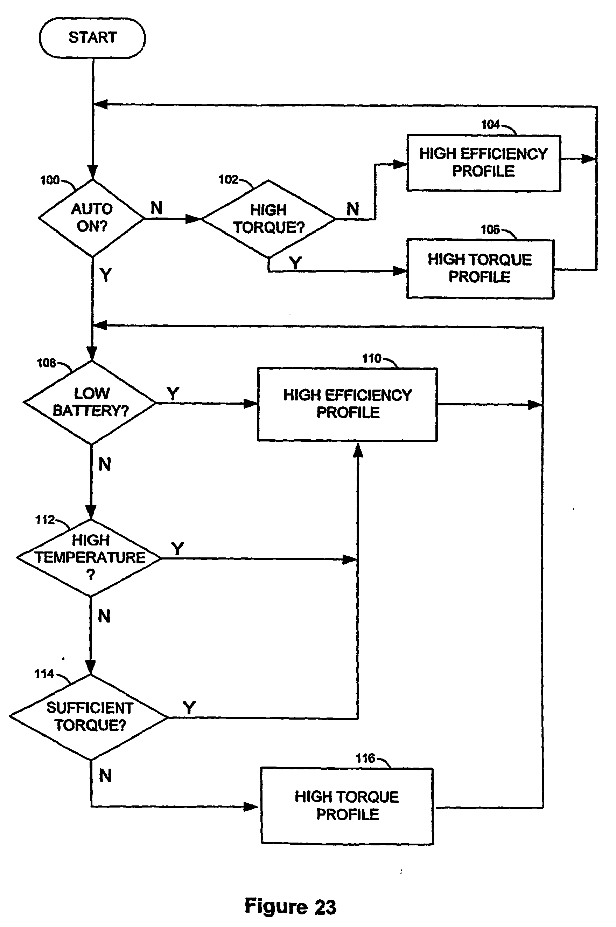

Selection of profile data can be made by the controller automatically as appropriate during motor operation. Alternatively, a user may select an operational mode corresponding to one of the profiles by inputting a profile selection signal at controller input 148. Profile selection operation may be described with reference to the flow chart shown in Figure 23.

The description pertains to a specific example in which the profile memory may contain data for implementing a high efficiency profile motor control scheme (which may be a control scheme for producing a sinusoidal motor current waveform) and for implementing a high torque profile (which may be a control scheme for producing a square wave motor current waveform). This example is merely illustrative, as data for other profiles may be stored in the profile memory and accessed under operating conditions for which different current waveforms may be appropriate.

In the absence of a profile select signal detected by the controller, an automatic profile selection mode may be invoked. At step 100, the controller may detect whether a user profile selection signal has been received at input 48 to determine whether the automatic mode is to be invoked.

If the determination in step 100 is negative, the controller may determine at step 102 whether the received profile select signal is a high torque profile selection. If not, the controller, after any appropriate delay, may access the profile memory to retrieve data from the high efficiency profile lookup table at step 104. The retrieved data may yield the desired current value $I_{d1}$ for the instantaneous values of the torque request and the sensed rotor position levels.

If, instead, the high torque profile has been selected, as determined in step 102, the corresponding lookup table may be accessed at step 106 and the appropriate value of $I_{di}$ for this table may be obtained. The process flow from both steps 104 and 106 may return to step 100 for determination of whether there is still a user profile selection received, and the nature of such selection may continue in the above described manner. Operation at steps 104 and 106 may occur after the selection in step 102 for a period sufficiently long to overcome transient effects in profile changeover. Thus, an appropriate delay for return of the process flow to step 100 may extend for a number of successive feedback samplings.

If no user profile selection input signal is present and the system has not been switched off, the controller may determine at step 100 that the waveform profile is to be automatically selected. In this automatic mode, determination may be made by the controller at step 108 of whether or not the system, in the high efficiency profile motor control scheme, has the capability of meeting the torque tracking requirements for the user requested torque input. Such determination may be made with reference to the value of the controller $V_i(t)$ from the output of block 90 of Figure 22 that would be derived from values of the user requested torque input and the motor speed. The torque demands may be met if the derived control voltages do not exceed the voltage level of the power supply.

If the derived level of this output does not exceed the power supply voltage as determined in step 108, the controller may apply the voltage required by the high efficiency motor control scheme for torque tracking. The controller, after any appropriate delay, may then access the profile memory to retrieve data from the high efficiency profile lookup table at step 110.

If, instead, the derived voltage level is higher than the power supply voltage, determination may be made at step 108 that the power supply capacity is exceeded. The controller, after any appropriate delay, may then access the profile memory to retrieve data from the high torque profile lookup table at step 116. The process flow from both steps 110 and 112 may return to step 100 to continue in the above described manner. The delays discussed above may be appropriate if operation is to change from one operational profile mode to another.

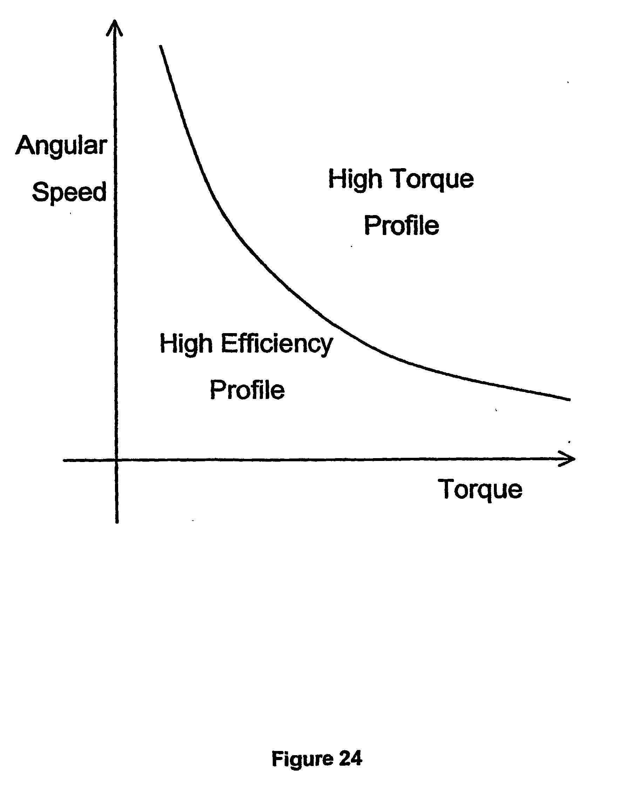

While the automatic mode profile selection represented by step 108 may be performed by repeated calculation of a torque capacity threshold on a real time basis, calculations of voltage for various combinations of torque request and motor speed may be made in advance and linked with the appropriate profile in a lookup table in the profile memory. Figure 24 is a curve that may represent a boundary in such a lookup table between ranges for high efficiency profile mode selection and high torque profile mode selection for values of torque and speed in accordance with the illustrated example.

The lookup table may be formulated by making the above described controller voltage/supply voltage comparison for a multitude of speed/requested torque combinations. Speed/torque combinations above the curve shown in Figure 24 may be beyond the capacity of the system to track torque in the high efficiency profile operational mode. The controller upon accessing this lookup table may select the high efficiency profile mode for speed/torque combinations represented by points below the curve and select the high torque profile mode for the remaining points.

Once a machine control scheme has been selected, the controller may control the energization of each electromagnetic circuit in accordance with the selected machine control scheme. In a motor, this energization of the electromagnetic circuit may be accomplished by controlling a switching circuit to apply an appropriate current waveform profile to each electromagnetic circuit. In a generator, this energization of the electromagnetic circuit may be accomplished by controlling the firing of an IGBT to appropriately shape the voltage and current induced in each electromagnetic circuit.

The controller may optimize the performance of the adaptive electric machine by dynamically selecting a machine control scheme in response to user inputs, machine operating conditions and machine operating parameters. To do this, an adaptive electric machine may enable use of a variety of control algorithms in addition to those described above. For example, at least three types of algorithms may be used in adaptive electric machines.

First are performance-oriented algorithms, in which most or all controllable parameters may be calculated to optimize desired performance characteristics at given speeds and torque. The torque-tracking motor control system discussed above may fall within this category.

Second are algorithms oriented toward working around faults, in which most or all controllable parameters may be re-calculated based on specific fault information so a given speed-torque profile may be maintained, and other desired performance characteristics can also be optimized to the extent possible.

Third are algorithms geared toward dealing with manufacturing tolerances and wear. These algorithms are based on the premise that each part of a motor, although manufactured to specification, may have some deviation from that specification. These algorithms may correct for such deviations, as well as deviations caused by wear.

By implementing various algorithms in machine control schemes, an adaptive electric machine may have a controller for dynamically adjusting the energization of the electromagnetic circuits of the machine during operation. Adjusting energization in response to user inputs, machine operating conditions and machine operating parameters may be done in order to obtain improved performance of the machine (such as maximizing efficiency or optimizing torque).

One natural application for adaptive electric motors may be use as a vehicle drive. An adaptive electric motor may be used in a wide range of applications in addition to vehicle drives. While it may be preferred in the implementation of a vehicle drive that the rotor surround the stator, in other applications the stator surrounding the rotor may be a preferable design. Thus, it is within the contemplation of the invention that each inner and outer annular member may comprise either the stator or rotor and may comprise either the group of electromagnets or permanent magnet ring. Also, while wound salient poles have been illustrated, windings may instead be provided in a non-salient slotted structure.

Particular electromagnet energization sequences may vary depending on various considerations. Energization of the electromagnets may be switched sequentially along the air gap periphery or in a different order. Electromagnet groups may all be energized at all times, although switched at individually programmed times. Conversely, individual electromagnets may be de-energized at predetermined sequentially induced, randomly induced, or non-sequentially induced intervals.

Although one embodiment of this invention described here may usually be considered a brushless DC motor, one of ordinary skill in the art would appreciate that the principles described may also be applicable to synchronous type alternating current motors and motors having wound elements energizable by a variety of pulse waveforms.

The source of electrical power for driving the motor may not be limited to a battery, but may include, for example, an alternating current source. Such an alternating current source may be converted to direct current or pulse waveform supply or may be used without such conversion to drive the motor as an alternating current synchronous motor.

Additional embodiments of this invention relate to methods of making a multiphase electric machine. One method embodiment for making a multiphase electric machine may comprise providing at least one member, with that member comprising a plurality of core elements. The core elements may then be arranged in groups, with each group having at least one core element and each group of core elements being associated with one of the phases of the multiphase machine.

The core elements in each group may then be structurally and/or electromagnetically separated from the core elements in each other group to enable control of electrical flow in each group of core elements independently of electrical flow in each other group. Each phase of the multiphase machine may then be controllable independently of each other phase, thereby establishing movement of the at least one member in a direction and with a force that are dynamically selectable.

Other embodiments of this invention relating to methods of making a multiphase electric machine may further comprise a rotor or other movable member, a stator or other stationary member, and other elements and steps.

Adaptive electric machines may also be used as electric generators. When used as a generator, an adaptive electric machine may have the same basic structure as when used as an electric motor. However, to achieve better results, the design of the electromagnetic circuits may generally differ, as may the control system used.

Figure 18(b) illustrates an example of a switch set and driver for an individual electromagnetic circuit for an adaptive electric generator. In this example each electromagnetic circuit may include four diodes (214, 216, 218 and 220) in a bridge rectifier. This example may also include an inductor 222, a diode 224, a capacitor 226, and an insulated gate bipolar transistor (IGBT) 228. The IGBT 228 may alternatively be a MOSFET.

In this example, each IGBT 228 may be connected to a digital signal processor (DSP) 230. The various electromagnetic circuits may connect at a node 232, and may be arranged in parallel, with each having the components of Figure 18(b). Alternatively, a common "three-phase" system may be constructed by tapping the windings of several stator elements in a three-phase Wye configuration having the same four-diode bridge rectifier.

Turning the rotor generates AC current induced in the stator pole windings. The bridge rectification diodes (214, 216, 218 and 220) may act on the current to produce a rectified DC current $V_R$ having a large amount of ripple. The inductor 222, IGBT 228, diode 224 and capacitor 226 may then act on that current to produce the desired constant DC output $V_{out}$.

The DSP 230 may send a pulse-width modulated signal having a constant frequency of, for example, 20 kHz and a varying duty cycle to the IGBT 222 that controls the firing of the IGBT 222. The duty cycle may be repeatedly calculated by the DSP 230 using the formula:

$$\text{Duty cycle} = 1 - (V_R/V_{out})$$

$V_R$ may be sampled by the DSP 230 at a point between the bridge rectifier (214, 216, 218 and 220) and the inductor 222. The duty cycle at which the DSP 230 pulse-width modulates its signal to the IGBT 222 may determine the time interval during which the IGBT 222 sinks current. An operating frequency of 20 kHz at which the DSP 230 pulse-width modulates its signal to the IGBT 222 may translate to signals having time durations that last 50 microseconds. During the 50 microseconds, a pulse whose width determines the time interval during which the IGBT 222 sinks current may be received at the IGBT 222.

For example, when the DSP 230 calculates a $V_R/V_{out}$ ratio of 0.8, a signal having a duty cycle of 0.2 may be transmitted to the IGBT 222, meaning a pulse that lasts for 10 of the 50 microseconds may be received at the IGBT 222, forcing the IGBT 222 to sink current for twenty percent of the 50 microsecond time interval. The DSP 230 may cease the transmission of its pulse-width modulated signal to the IGBT 222 when it senses a voltage $V_R$ that may be less than some appropriate operating voltage $V_{op}$.

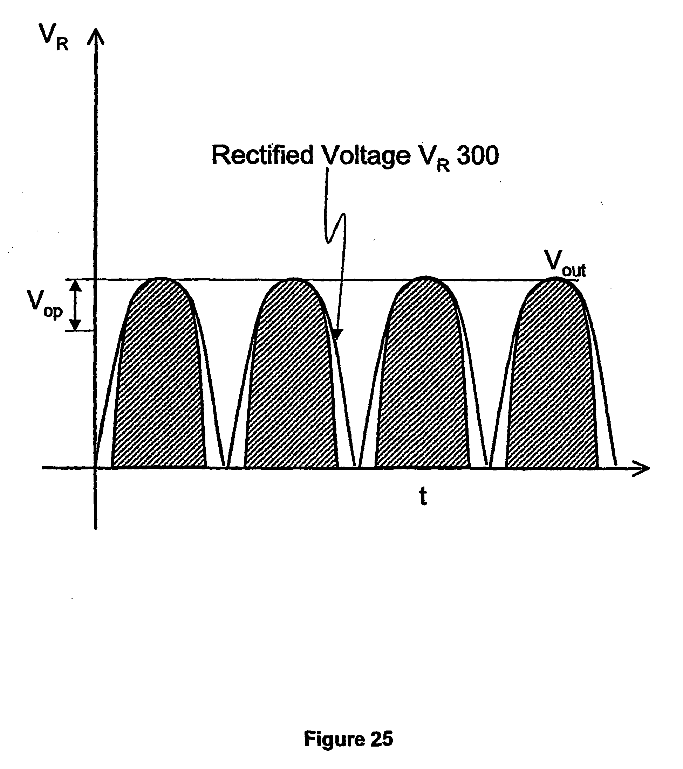

Figure 25 illustrates a rippled rectified DC voltage $V_R$ 300 over time and an appropriate operating voltage $V_{op}$, during which the DSP 230 may transmit its pulse-width modulated signal to control the firing of the IGBT 222. The desired constant DC output voltage $V_{out}$ is illustrated as well. At low sensed rectified voltages, when $V_R$ is less than $V_{op}$, it may be inefficient to pulse-width modulate the firing of the IGBT 222 because the duty cycle as calculated by the DSP 230 nears its maximum of 1. Instead, the capacitor 226 may discharge during intervals in which $V_R$ is less than the chosen $V_{op}$.

In this way, electronic feedback may be utilized in the form of $V_R$ as opposed to the mechanical feedback utilized in prior art systems. This may eliminate the need for the rotor angular position feedback necessary for existing DC brushless generator designs to control the generation of a constant DC output $V_{out}$, and may allow less costly electronic components and control to be used.

Further, the high constant frequency at which the DSP 230 pulse-width modulates the IGBT 228 may enable the inductor 222 and capacitor 226 to have a very small inductance and capacitance, respectively. As additional phases are added to the design of the adaptive generator, the inductance and capacitance values may drop further, as the ripple inherent within $V_R$ lessens.

For all these reasons, the cost of an adaptive generator may be estimated to be approximately one-third that of a conventional DC brushless generator system. In addition, shoot-through failure may be eliminated in the adaptive generator by replacing a MOSFET bridge with a four-diode bridge rectifier.

As with an adaptive electric motor, various generator control schemes may be implemented using the controller to adapt the generator to various conditions. As with the motor, these conditions may be any combination of user inputs, sensed machine operating conditions (such as wind speed or direction), and sensed machine operating parameters.

In this disclosure there are shown and described only a preferred embodiment or embodiments of the invention and but a few examples of its versatility. It is to be understood that the invention is capable of use in various other combinations and environments and is capable of changes or modifications within the scope as expressed in the appended claims.

As will be evident to those skilled in the art, adaptive electric machines need not be limited to rotating electric machines, but can also be used with linear motors (such as those used for electric train propulsion) and other types of electric machines. In a rotating electric machine, both the stator and the rotor can have electromagnets, or one or the other can have permanent magnets.

**Claims**

1. A multi-phase electric machine comprising:

   a first member comprising a plurality of stator core elements (32), each having a conductive winding (34), the plurality of stator core elements (32) being arranged in a plurality of stator groups, each stator group comprising at least one stator core element (32), each stator group being associated with at least one electric phase of the multi-phase electric machine, and each group being electrically and magnetically isolated from the other stator groups;

   a second member comprising a rotor element (20) and a machine controller (60) that is in electrical contact with the conductive windings (34) of the stator core elements (32);

   **characterized in that**
   the machine controller (60) is adapted to control electrical current flow in each stator group independently of electrical current flow in each of the other stator groups, each phase of the multi-phase machine (10) being controllable independently, the machine controller (60) further being adapted to control the electrical current in one phase with a current shape or other current parameter that is different from that in another phase.

2. The multi-phase electric machine of claim 1, wherein said second member moves in a direction and with a force relative to the first member that is adjustable during machine operation.

3. The multi-phase electric machine of any of the preceding claims, wherein said first and second member (20, 30) are located in radial alignment to each other.

4. The multi-phase electric machine of any of the preceding claims, wherein the plurality of stator core elements (32) is located along a radial perimeter of said first member.

5. The multi-phase electric machine of any of the preceding claims, wherein movement of the second member is established at a speed and a torque which during operation vary on the basis of a machine input.

6. The multi-phase electric machine of any of the preceding claims, wherein the machine controller (60) has a processing unit for selecting an electrical current profile that optimises the efficiency of the machine.

7. The multi-phase electric machine of any of the preceding claims, wherein the rotor element (20) has permanent magnets (22) attached to it.

8. The multi-phase electric machine of any of the preceding claims, wherein the machine is a reluctance motor.

9. A method of manufacturing a multi-phase electric machine comprising:

providing a multi-phase electric machine comprising a first member, the first member comprising a plurality of stator core elements (32),
arranging the plurality of stator core elements in groups, each stator group comprising at least one stator core element (32), each stator group being associated with at least one electric phase of the multi-phase electric machine, and
providing each stator core element with a conductive winding (34) that is in electrical communication with a controller (60), each group being electrically and magnetically isolated from the other stator group, so as to control electrical flow in each group of core elements independently of electrical flow in each other group, and each phase of the multi-phase electric machine (60) being controllable independently of each other phase,

**characterized by**
providing a machine controller (60) that is in electrical contact with the conductive windings (36) of the stator core elements, the machine controller (60) being adapted to control electrical current flow in each stator group independently of electrical current flow in each of the other stator groups, each phase of the multi-phase machine (10) being controllable independently, the machine controller (60) further being adapted to control the electrical current in one phase with a current shape or other current parameter that is different from that in another phase.

10. The method of claim 9, wherein the multi-phase electric machine further is provided with a second member.

11. The method of any of claims 9 and 10, wherein the plurality of stator core elements (32) are provided to be located along a radial perimeter of said first member.

12. Method of operating a multi-phase electric machine obtainable by any of the claims 10 and 11, wherein the second member is moved at a speed and a torque which during operation vary on the basis of a machine input.

13. The method of any of claim 12, further comprising the steps of:

providing at least two machine control schemes for energizing each of the stator groups, and dynamically selecting between the machine control schemes during motor operation based on operator inputs, machine operating conditions and machine operating parameters.


**Patentansprüche**

1. Elektrische Mehrphasen-Maschine mit:

einem ersten Teil, das eine Vielzahl von Statorkern-Elementen (32) umfasst, wobei jedes eine leitfähige Wicklung (34) hat, wobei die Vielzahl der Statorkern-Elemente (32) in einer Vielzahl von Statorgruppen angeordnet ist, wobei jede Statorgruppe mindestens ein Statorkern-Element (32) umfasst, wobei jede Statorgruppe mit mindestens einer elektrischen Phase der elektrischen Mehrphasen-Maschine verknüpft ist, und wobei jede Gruppe elektrisch und magnetisch von den anderen Statorgruppen isoliert ist;
einem zweiten Teil, das ein Rotor-Element (20) und eine Maschinensteuereinheit (60) umfasst, die in elektrischem Kontakt mit den leitfähigen Wicklungen (34) der Statorkern-Elemente (32) ist;

**dadurch gekennzeichnet, dass**
die Maschinensteuereinheit (60) ausgebildet ist zum Steuern eines elektrischen Stromflusses in jeder Statorgruppe unabhängig vom elektrischen Stromfluss in jeder der anderen Statorgruppen, wobei jede Phase der Mehrphasen-Maschine (10) unabhängig steuerbar ist, wobei die Maschinensteuereinheit (60) ferner ausgebildet ist zum Steuern des elektrischen Stroms in einer Phase mit einer Stromform oder einem anderen Stromparameter, der sich von dem in einer anderen Phase unterscheidet.

2. Elektrische Mehrphasen-Maschine von Anspruch 1, wobei das zweite Teil sich in eine Richtung und mit einer Kraft relativ zu dem ersten Teil bewegt, das während des Maschinenbetriebs einstellbar ist.

3. Elektrische Mehrphasen-Maschine nach einem der vorhergehenden Ansprüche, wobei das erste und zweite Teil (20, 30) in radialer Ausrichtung zueinander untergebracht sind.

4. Elektrische Mehrphasen-Maschine nach einem der vorhergehenden Ansprüche, wobei die Vielzahl von Statorkern-Elementen (32) entlang eines Radialumfangs des ersten Teils untergebracht ist.

5. Elektrische Mehrphasen-Maschine nach einem der vorhergehenden Ansprüche, wobei die Bewegung des zweiten Teils bei einer Geschwindigkeit und einem Moment gebildet wird, welche während des Betriebs auf der Basis einer Maschineneingabe variieren.

6. Elektrische Mehrphasen-Maschine nach einem der vorhergehenden Ansprüche, wobei die Maschinensteuereinheit (60) eine Verarbeitungseinheit zum Auswählen eines elektrischen Stromprofils hat, das die Effizienz der Maschine optimiert.

7. Elektrische Mehrphasen-Maschine nach einem der vorhergehenden Ansprüche, wobei Permanentmagnete (22) an dem Rotor-Element (20) angebracht sind.

8. Elektrische Mehrphasen-Maschine nach einem der vorhergehenden Ansprüche, wobei die Maschine ein Reluktanzmotor ist.

9. Verfahren zum Herstellen einer elektrischen Mehrphasen-Maschine mit:

Bereitstellen einer ein erstes Teil umfassenden elektrischen Mehrphasen-Maschine, wobei das erste Teil eine Vielzahl von Statorkern-Elementen (32) umfasst,
Anordnen der Vielzahl von Statorkern-Elementen in Gruppen, wobei jede Gruppe mindestens ein Statorkern-Element (32) umfasst, wobei jede Statorgruppe mit mindestens einer elektrischen Phase der elektrischen Mehrphasen-Maschine verknüpft ist, und
Versorgen eines jeden Statorkern-Elementes mit einer leitfähigen Wicklung (34), die in elektrischer Kommunikation mit einer Steuereinheit (60) ist, wobei jede Gruppe elektrisch und magnetisch von der anderen Statorgruppe isoliert ist, um den elektrischen Fluss in jeder Gruppe von Kernelementen unabhängig vom elektrischen Fluss in jeder anderen Gruppe zu steuern, und wobei jede Phase der elektrischen Mehrphasen-Maschine (60) unabhängig von jeder anderen Phase steuerbar ist,

**gekennzeichnet durch**
Bereitstellen einer Maschinensteuereinheit (60), die in elektrischem Kontakt mit den leitfähigen Wicklungen (36) der Statorkern-Elemente ist, wobei die Maschinensteuereinheit (60) ausgebildet ist zum Steuern eines elektrischen Stromflusses in jeder Statorgruppe unabhängig vom elektrischen Stromfluss in jeder der anderen Statorgruppen, wobei jede Phase der Mehrphasen-Maschine (10) unabhängig steuerbar ist, wobei die Maschinensteuereinheit (60) ferner ausgebildet ist zum Steuern des elektrischen Stroms in einer Phase mit einer Stromform oder einem anderen Stromparameter, der sich von dem in einer anderen Phase unterscheidet.

10. Verfahren von Anspruch 9, wobei die elektrische Mehrphasen-Maschine ferner mit einem zweiten Teil bereitgestellt wird.

11. Verfahren nach Anspruch 9 oder 10, wobei die Vielzahl von Statorkern-Elementen (32) bereitgestellt wird, entlang eines Radialumfangs des ersten Teils untergebracht zu sein.

12. Verfahren zum Bedienen bzw. Betreiben einer elektrischen Mehrphasen-Maschine, die durch einen der Ansprüche 10 und 11 erhältlich ist, wobei das zweite Teil bei einer Geschwindigkeit und einem Moment bewegt wird, welche während des Betriebs auf der Basis einer Maschineneingabe variieren.

**13.** Verfahren nach Anspruch 12, ferner die Schritte umfassend zum:

Bereitstellen von mindestens zwei Maschinensteuermethoden zum Erregen jeder der Statorgruppen und dynamischen Auswählen zwischen den Maschinensteuermethoden während des Motorbetriebs basierend auf Operatoreingaben, Maschinenbetriebsbedingungen und Maschinenbetriebsparametern.

**Revendications**

**1.** Machine électrique à phases multiples comprenant :

un premier élément comprenant une pluralité d'éléments de noyaux de stator (32), chacun comportant un enroulement conducteur (34), la pluralité d'éléments de noyaux de stator (32) étant disposé dans une pluralité de groupes de stator, chaque groupe de stator comprenant au moins un élément de noyau de stator (32), chaque groupe de stator étant associé à au moins une phase électrique de la machine électrique à phases multiples, et chaque groupe étant isolé électriquement et magnétiquement des autres groupes de stator, un second élément comprenant un élément de rotor (20) et un contrôleur de machine (60) qui est en contact électrique avec les enroulements conducteurs (34) des éléments de noyaux de stator (32),

**caractérisée en ce que**
le contrôleur de machine (60) est conçu pour commander une circulation de courant électrique dans chaque groupe de stator indépendamment de la circulation de courant électrique dans chacun des autres groupes de stator, chaque phase de la machine à phases multiples (10) pouvant être commandée indépendamment, le contrôleur de machine (60) étant en outre conçu pour commander le courant électrique dans une phase avec une forme de courant ou autre paramètre du courant qui est différent de celui d'une autre phase.

**2.** Machine électrique à phases multiples selon la revendication 1, dans laquelle ledit second élément se déplace dans une direction et avec une force par rapport au premier élément qui est réglable pendant le fonctionnement de la machine.

**3.** Machine électrique à phases multiples selon l'une quelconque des revendications précédentes, dans laquelle lesdits premier et second éléments (20, 30) sont situés en alignement radial l'un avec l'autre.

**4.** Machine électrique à phases multiples selon l'une quelconque des revendications précédentes, dans laquelle la pluralité d'éléments de noyaux de stator (32) est située le long d'un périmètre radial dudit premier élément.

**5.** Machine électrique à phases multiples selon l'une quelconque des revendications précédentes, dans laquelle le déplacement du second élément est établi à une vitesse et un couple qui varient pendant le fonctionnement sur la base d'une entrée de la machine.

**6.** Machine électrique à phases multiples selon l'une quelconque des revendications précédentes, dans laquelle le contrôleur de machine (60) comporte une unité de traitement destinée à sélectionner un profil de courant électrique qui optimise le rendement de la machine.

**7.** Machine électrique à phases multiples selon l'une quelconque des revendications précédentes, dans laquelle l'élément de rotor (20) comporte des aimants permanents (22) qui lui sont fixés.

**8.** Machine électrique à phases multiples selon l'une quelconque des revendications précédentes, où la machine est un moteur à réluctance.

**9.** Procédé de fabrication d'une machine électrique à phases multiples comprenant les étapes suivantes :

fournir une machine électrique à phases multiples comprenant un premier élément, le premier élément comprenant une pluralité d'éléments de noyaux de stator (32),
agencer la pluralité d'éléments de noyaux de stator en groupes, chaque groupe de stator comprenant au moins un élément de noyau de stator (32), chaque groupe de stator étant associé à au moins une phase électrique de la machine électrique à phases multiples, et
munir chaque élément de noyau de stator d'un enroulement conducteur (34) qui est en communication électrique avec un contrôleur (60), chaque groupe étant électriquement et magnétiquement isolé de l'autre groupe de stator, de façon à commander une circulation de courant électrique dans chaque groupe d'éléments de noyaux indépendamment d'une circulation électrique dans chaque autre groupe, et chaque phase de la machine électrique à phases multiples (60) pouvant être commandée indépendamment de chaque autre phase,

**caractérisé par**
la fourniture d'un contrôleur de machine (60) qui est en contact électrique avec les enroulements conducteurs (36) des éléments de noyaux de stator, le contrôleur de machine (60) étant conçu pour commander une circulation de courant électrique dans chaque groupe de stator indépendamment d'une circulation de courant électrique dans chacun des autres groupes de stator, chaque phase de la machine à phases multiples (10) pouvant être commandée indépendamment, le contrôleur de machine (60) étant en outre conçu pour commander le courant électrique dans une phase avec une forme de courant ou autre paramètre de courant qui est différent de celui d'une autre phase.

10. Procédé selon la revendication 9, dans lequel la machine électrique à phases multiples est en outre munie d'un second élément.

11. Procédé selon l'une quelconque des revendications 9 et 10, dans lequel la pluralité d'éléments de noyaux de stator (32) sont prévus être situés le long d'un périmètre radial dudit premier élément.

12. Procédé de mise en oeuvre d'une machine électrique à phases multiples pouvant être obtenue selon l'une quelconque des revendications 10 et 11, dans lequel le second élément est déplacé à une vitesse et à un couple qui, pendant le fonctionnement, varient sur la base d'une entrée de la machine.

13. Procédé selon la revendication 12, comprenant en outre les étapes consistant à :

procurer au moins deux principes de commande de machine pour exciter chacun des groupes de stator, et sélectionner dynamiquement entre les principes de commande de machine pendant le fonctionnement du moteur sur la base des entrées de l'opérateur, des conditions de fonctionnement de la machine et des paramètres de fonctionnement de la machine.

**Figure 1**

**Figure 2(a)**

**Figure 2(b)**

**Figure 3**

Figure 4(a)

Figure 4(b)

Figure 4(c)

Figure 5

**Figure 6**

EP 1 413 046 B1

**Figure 7**

302

304

306

308

$V_s^K, A_s^K$

$V_s^1, A_s^1$

$V_s^N, A_s^N$

Figure 8

Figure 9

302
304
306
308

$V_S{}^K$ , $A_S{}^K$

$V_R$ , $A_R$

$V_S{}^N$ , $A_S{}^N$        $V_S{}^1$ , $A_S{}^1$

Figure 10

EP 1 413 046 B1

PRIOR ART

FIGURE 11 (a)

Figure 11 (b)

MODULATORS

STATOR

USER
INPUTS

EXAMPLES:
–IN A CAR MOTOR
 • ACCELERATION
 • BRAKING

SENSED
OPERATING CONDITIONS

EXAMPLES:
–IN A CAR MOTOR
 • WHEEL SPEED
 • WHEEL TILT ANGLE
 • TURNING
–IN A WINDMILL GENERATOR
 • WIND SPEED

60

CONTROLLER

| POWER MODULE 1 | ENERGIZATION 1 | ELECTROMAGNETIC CIRCUIT 1 |
| POWER MODULE 2 | ENERGIZATION 2 | ELECTROMAGNETIC CIRCUIT 2 |
| POWER MODULE 3 | ENERGIZATION 3 | ELECTROMAGNETIC CIRCUIT 3 |
| POWER MODULE 4 | ENERGIZATION 4 | ELECTROMAGNETIC CIRCUIT 4 |
| POWER MODULE 5 | ENERGIZATION 5 | ELECTROMAGNETIC CIRCUIT 5 |
| POWER MODULE 6 | ENERGIZATION 6 | ELECTROMAGNETIC CIRCUIT 6 |
| POWER MODULE 7 | ENERGIZATION 7 | ELECTROMAGNETIC CIRCUIT 7 |

ROTOR

ELECTRICAL
ENERGY

SENSOR

SENSED MACHINE
OPERATING PARAMETERS

ENERGY
CONVERTERS

EXAMPLES:
–ROTATIONAL SPEED OF MACHINE
–RELATIVE POSITION OF ROTOR

**Figure 12**

EP 1 413 046 B1

**Figure 13**

EP 1 413 046 B1

EP 1 413 046 B1

**Figure 14**

Figure 15

Figure 16

**Figure 17**

EP 1 413 046 B1

**Figure 18(a)**

**Figure 18 (b)**

POSITION FEEDBACK - $\theta(t)$

CONTROLLER 60

POWER SOURCE 50

ELECTRONIC SWITCH SET #1 52a

ELECTRONIC SWITCH SET #2 52b

ELECTRONIC SWITCH SET #3 52c

ELECTRONIC SWITCH SET #4 52d

ELECTRONIC SWITCH SET #5 52e

ELECTRONIC SWITCH SET #6 52f

ELECTRONIC SWITCH SET #7 52g

M O T O R

W I N D I N G S

34

$\omega(t)$   $\tau(t)$

**Figure 19**

EP 1 413 046 B1

HALL SENSOR FEEDBACK FOR GATE FIRING SEQUENCE

Figure 20

EP 1 413 046 B1

EP 1 413 046 B1

DIGITAL SIGNAL PROCESSOR

MOTOR WINDINGS

$\theta(t)$

$\omega(t)$   $\tau(t)$

| 70a | 68a | 52a | |
|---|---|---|---|
| PWM GENERATOR #1 | GATE DRIVER #1 | H-BRIDGE #1 | Ⓐ $I_1$ |

$V_{s1}$

| 70b | 68b | 52b | |
|---|---|---|---|
| PWM GENERATOR #2 | GATE DRIVER #2 | H-BRIDGE #2 | Ⓐ $I_2$ |

$V_{s2}$

| 70c | 68c | 52c | |
|---|---|---|---|
| PWM GENERATOR #3 | GATE DRIVER #3 | H-BRIDGE #3 | Ⓐ $I_3$ |

$V_{s3}$

| 70d | 68d | 52d | |
|---|---|---|---|
| PWM GENERATOR #4 | GATE DRIVER #4 | H-BRIDGE #4 | Ⓐ $I_4$ |

$V_{s4}$

| 70e | 68e | 52e | |
|---|---|---|---|
| PWM GENERATOR #5 | GATE DRIVER #5 | H-BRIDGE #5 | Ⓐ $I_5$ |

$V_{s5}$

| 70f | 68f | 52f | |
|---|---|---|---|
| PWM GENERATOR #6 | GATE DRIVER #6 | H-BRIDGE #6 | Ⓐ $I_6$ |

$V_{s6}$

| 70g | 68g | 52g | |
|---|---|---|---|
| PWM GENERATOR #7 | GATE DRIVER #7 | H-BRIDGE #7 | Ⓐ $I_7$ |

$V_{s7}$

**Figure 21**

52

EP 1 413 046 B1

60

$I_i(t)$  $\omega(t)$

$\theta(t)$

84

$$\theta_i(t) = \mathrm{mod}\left\{\mathrm{mod}\left(\theta, \frac{2\pi}{N_r}\right) + (i-1)\cdot\frac{2\pi}{N_s N_r}\cdot\frac{2\pi}{N_r}\right\}$$

96

$R_i$

$\theta_i(t)$

82

$$\left(\frac{2\cdot\tau_d}{N_s K_{ri}}\right)\sin(N_r\theta_i)$$

$\tau_d(t)$

$I_{di}(t)$

$-$

$e_i(t)$

86

$+$

88

$k_S$

90

$$L_i\frac{d}{dt}I_{di} + R_i I_i + E_i + k_s e_i$$

$V_i(t)$

94

$$(K_{ei}\omega)\sin(N_r\theta_i)$$

$E_i(t)$

92

$$\frac{2L_i}{N_s\cdot K_{ri}}(N_i\omega)\cdot\tau_d\cdot\cos(N_r\theta_i)$$

$$L_i\frac{d}{dt}I_{di}$$

**Figure 22**

**Figure 23**

Figure 24

Figure 25